# EUROPEAN PATENT APPLICATION

(11) **EP 1 494 113 A1**
(43) Date of publication of application: **05.01.2005**
(21) Application number: 03703277.8
(22) Date of filing: 10.02.2003
(51) Int. Cl.: G06F 3/12, G06F 3/00

(54) **CONTENT GENERATOR, RECEIVER, PRINTER, CONTENT PRINTING SYSTEM**

(30) Priority: 10.04.2002 JP 2002108610; 05.08.2002 JP 2002227907
(71) Applicant: MATSUSHITA ELECTRIC INDUSTRIAL CO., LTD., Kadoma-shi, Osaka 571-8501 (JP)
(72) Inventor: TAKAMINE, Kouichi, Kawanishi-shi, Hyogo 666-0015 (JP); NAKAOKA, Hideaki, Toyonaka-shi, Osaka 560-0085 (JP)
(74) Representative: Balsters, Robert
(86) International application number: PCT/JP2003/001354
(87) International publication number: WO 2003/085509

(57) **Abstract**

The STB (2) includes a communication unit (202) and a print style update judgment unit (203). The communication unit (202) receives a print content including print data and print control information that are associated with each other. The print control information includes ( i ) printing apparatus information for specifying at least one printing apparatus or the model of a printing apparatus and ( ii ) a print style sheet describing print settings of the print data generated by the printing apparatus. The print style update judgment unit (203) judges whether a print style sheet should be updated or not by ( i ) extracting print control information from the received print content, ( ii ) obtaining print specification information concerning the specifications of the print output of the printing apparatus (3) including the information for specifying the printing apparatus (3) or the model of the printing apparatus (3) and ( iii ) comparing the printing apparatus information included in the print control information with the print specification information.

## Description

### Technical Field

The present invention relates to a presentation apparatus that performs displaying or printing according to a style sheet, especially relates to a printing apparatus, a receiving apparatus, a content generation apparatus and a content printing system.

### Background Art

The recent advances of digital technique and information technology (IT) have made it easier to exchange electronic mail and the like so as to communicate with a third person using a personal computer (called PC from here) and the like. Today, in addition, the environment where electronic mail is used using a mobile information terminal such as a mobile phone is prepared. Also, in addition, a function for sending mail using a broadcasting wave is added to digital televisions (called DTV from here) and the like, and a situation where efficient communication is performed is prepared everywhere.

Along with this, a function of a software for a word processor installed in an information processing apparatus such as a PC has improved, and, today, it has become possible to set various kinds and sizes of fonts, many kinds of underlines, eraselines, character ornaments, half-tone dot meshing and the like as a character format for documents to be displayed on a display screen. Also, concerning a paragraph format, it becomes possible to easily set an indentation to an arbitrary point, arbitrary space between lines, arbitrary space between paragraphs, character justification such as left justification, center justification, right justification and the like.

And, on condition that a user previously decides respective items for print settings such as kinds of fonts, sizes of characters, colors, space between lines, ornamentation and the like depending on the appearance of print data, stores these items as a print style sheet, and gives the print style sheet a name as a specific paragraph format or a format of a group of character formats, the user can later use the format setting that is set as the print style sheet for another print data by specifying the name. Likewise, as to the display data, the contents of the style sheet is reflected.

In this way, in the case of outputting print data, display data and the like (called output data from here) to an output apparatus such as a printing apparatus or a display apparatus, outputting the output data based on a style sheet with a previously set output style enables obtaining an output result with an appearance according to the style sheet.

However, there is a problem that the display result differs from the display result expected by the sending apparatus even when data is displayed based on the previously set display style sheet because, as electronic mail includes character information, the information terminal that receives and displays the electronic mail includes a display unit that functions differently from the receiving terminal expected by the sending apparatus, kinds and sizes of fonts to be displayed by the receiving apparatus are different, and the setting of the mail soft is different.

For example, as the function of the display unit of a PC and the function of the display unit of a mobile information terminal are widely different from each other, displaying data on a display of a mobile phone with a lower display capability according to a display style sheet that is set for a display apparatus with a higher display capability changes the number of characters in a line and the number of lines, which affects the readability of the data. In other words, even in the case where the display style is previously set, difference in the display capability of the display apparatus changes the display result. In addition, even in the case of the same kinds of PCs, using a different mail soft or difference in the setting of a mail soft causes a similar trouble.

Further, even in the case of printing character information on the paper, there is a problem that the print result differs from the print result expected by the sending apparatus depending on changes of various kinds of conditions such as sizes of paper, kinds and sizes of fonts and the like used for the printing apparatus of the receiving side.

More specifically, in the case where the types of fonts can be used for the printing apparatus of the receiving apparatus, print execution range that can be used for actual printing and the like differ from the types of fonts and the print execution range that were expected by the sending apparatus, another action such as printing using a substitute font is required. In the case of printing using a substitute font, using a substitute font changes, for example, the number of characters in a line of an A4 paper even in the case where the printing is performed based on the previously set print style sheet. This causes a problem that the number of lines of an A4 paper also changes and print data that should be included in a single A4 paper cannot be fully included. In other words, even in the case where a print style is previously set, the print result differs depending on the function of the printing apparatus such as the types of fonts that can be used for the printing apparatus, the print execution range for actual printing and the like.

The present invention is the one that is presented in order to solve the above-mentioned problems, and an object of the present invention is to provide a presentation apparatus that displays or prints data that approximately matches the display result or print result expected by the sending apparatus, a receiving apparatus that is connected to the presentation apparatus, a content generation apparatus and a content printing system.

### Disclosure of Invention

In order to achieve the above-mentioned object, the content generation apparatus of the present invention comprises: a presentation control information generation unit operable to generate presentation control information that includes a style sheet describing presentation settings in the case where presentation data is presented based on a presentation specification that is previously defined in order to guarantee uniqueness concerning a page layout of the presentation data; and a content generation unit operable to associate each of the presentation data with the presentation control information and generate a content including information indicating the association and the presentation data.

Here, the presentation control information may include presentation specification information concerning the presentation specification.

Further, the presentation specification information may include presentation apparatus information specifying one of ( i ) at least one presentation apparatus that is a display apparatus or a printing apparatus and ( ii ) a model of the presentation apparatus.

To be more specific, as data format (described as DF from here), for example, it is possible to secure the uniqueness by making a content based on the presentation specification that has already been defined including necessary additional prescription (addition from a tag prescribed by the W3C) with reference to the XHTML Basic and CSS mobile that are standardized by the WorldWideWeb Consortium (the standardization group W3C) concerning the WorldWideWeb (WWW).

Note that the word "uniqueness" is used in order to mean displaying or print data that approximately matches the display result or print result that has been expected by a sending apparatus side. "Uniqueness" here does not guarantee that they perfectly matches each other but the outlines of the page layouts are similar to each other.

It is possible to secure the uniqueness between the display or print result that has been expected by the sending side apparatus and the display or print result that is realized by the presentation apparatus by generating contents based on the previously defined presentation specification and implementing them in the presentation apparatus side with reference to the previously defined presentation specification.

The presentation specifications that have been defined in the case where the uniqueness is required should prescribe at least the following items:
( i ) Specifications are fonts and sizes of characters, width of lines and the like. A size is specified using an absolute value so as to select a font from the prescribed fonts.
( ii ) As to a page layout guarantee, page break control information is used so as to prevent the page break from occurring in the middle of information enclosed by a square frame (described as a box) or the like.
( iii ) The location of a box is specified in the property of the box margin.
(iv) The size of an image, the height and width of an image display is surely described.
( v ) The content is generated considering the printable range (margin) of the presentation apparatus, especially the printing apparatus.

In this way, the content generation apparatus generates contents based on the presentation specification that has previously defined, and the presentation apparatus (the receiving apparatus or the printing apparatus) implements the presentation function (display or print) based on the implementation rule with reference to the previously defined presentation specification. This simple structure enables guaranteeing the uniqueness.

Therefore, according to this content generation apparatus of this present invention, the presentation apparatus side that received contents checks whether or not the presentation apparatus that presents and outputs the presentation data or the model of the presentation data matches the presentation apparatus that presents and outputs the presentation data or the model of the presentation data that are specified by the presentation apparatus information using the presentation apparatus information extracted from the presentation control information. This produces an effect of enabling previously judging whether the presentation result according to the presentation settings that are set by the content generation apparatus is obtained or not in the case where the presentation data is presented according to the style sheet.

Also, the receiving apparatus of the present invention, comprising: a content receiving unit operable to receive a content including ( i ) presentation data and ( ii ) presentation control information, which is associated with the presentation data, which includes a style sheet describing presentation settings in the case where the presentation data is presented based on a presentation specification that is previously defined in order to guarantee uniqueness concerning a page layout of the presentation data; a presentation control information extraction unit operable to extract the presentation control information from the received content; a presentation apparatus specification information obtainment unit operable to obtain, from a presentation apparatus connected to the receiving apparatus, presentation apparatus specification information concerning a specification of a presentation output of the presentation apparatus; and an update judgment unit operable to compare the presentation control information with the obtained presentation apparatus specification information and judge whether the style sheet should be updated or not.

Here, the presentation control information may include presentation specification information concerning the presentation specification, and the update judgment unit compares the presentation specification information included in the presentation control information with the obtained presentation apparatus specification information and judges whether the style sheet should be updated or not.

Further, the presentation specification information may include presentation apparatus information specifying one of ( i ) at least one presentation apparatus that is a display apparatus or a printing apparatus and ( ii ) a model of the presentation apparatus, and the update judgment unit compares the presentation apparatus information included in the presentation control information with the obtained presentation apparatus specification information judges whether the style sheet should be updated or not.

Therefore, this receiving apparatus of the present invention produces an effect that the presentation apparatus side can previously judge whether the same presentation result according to the presentation settings that have been set by the content generation apparatus can be obtained or not in the case where the presentation data is presented according to the style sheet, by checking which model of the following presentation apparatuses is specified by the presentation apparatus information extracted from the presentation control information. The following presentation apparatuses are: a presentation apparatus that is connected to the receiving apparatus; a presentation apparatus whose model is specified by the presentation apparatus information; and the model of the presentation apparatus, in other words, it produces the effect that the presentation apparatus side can judge whether the style sheet should be modified for update or not.

The presentation apparatus of the present invention comprising: a content obtainment unit operable to obtain, from a connected receiving apparatus, a content that includes ( i ) presentation data and ( ii ) presentation control information which is associated with the presentation data that includes (a) presentation specification information concerning a presentation specification that is previously defined in order to guarantee uniqueness concerning a page layout of the presentation data and (b) a style sheet describing presentation settings in the case where the presentation apparatus presents the presentation data of the content; a presentation control information extraction unit operable to extract the presentation control information from the obtained content; an update judgment unit operable to compare the presentation specification information included in the presentation control information with presentation apparatus specification information concerning a specification of self presentation output and judge whether the style sheet should be updated or not; a layout rule extraction unit operable to extract a layout rule indicating a selection range of parameters of the presentation settings from the presentation apparatus specification information in the case of updating the style sheet as a result of the judgment; a style sheet update unit operable to change the parameters of the style sheet with reference to the extracted layout rule and the style sheet; and a presentation unit operable to present the presentation data based on the updated style sheet.

Here, the presentation specification information includes presentation apparatus information specifying one of ( i ) at least one presentation apparatus that is a display apparatus or a printing apparatus and ( ii ) a model of the presentation apparatus, and the update judgment unit may compare presentation apparatus information included in the presentation control information with the presentation apparatus specification information and may judge whether the style sheet should be updated or not.

Therefore, with the presentation apparatus of the present invention, it is possible to judge whether or not the same presentation result according to the presentation settings that is set by the content generation apparatus is obtained, that is, whether or not the style sheet should be modified for update in the case where the presentation data is presented according to the style sheet by checking whether or not its presentation apparatus or the model of the presentation apparatus is the presentation apparatus or the model of the presentation apparatus that are specified by the presentation apparatus information using the presentation apparatus information extracted from the presentation control information. In addition, according to this judgment result, the parameters inside the style sheet are changed and the presentation data can be presented based on the style sheet after the update. In other words, in the case where the presentation apparatus judges that the same presentation result according to the presentation settings that are set by the content generation apparatus can not be obtained on condition that the presentation data is presented according to the style sheet in the contents, the presentation apparatus produces an effect that it can obtain approximately the same style presentation result as the presentation style initially set by the content generation apparatus, that is, the uniqueness is guaranteed, by changing parameters that badly affects the presentation result of the presentation data in the style sheet such as the font types and sizes so as to update the style sheet in a way that more significant parameters in the style sheet such as the number of lines in a page or the number of characters in a line can be maintained.

### Brief Description of Drawings

FIG. 1 is a block diagram showing the outline structure of the content presentation system of this embodiment;
FIG. 2 is a block diagram showing more detailed structure of each apparatus in the content presentation system shown in FIG. 1;
FIG. 3 is a diagram showing an example of the print content generated by the content generation apparatus shown in FIG. 1 and FIG. 2;
FIG. 4 is a diagram showing an example of the print result in the case where a printing apparatus that is not specified by the printing apparatus information prints the print data shown in FIG. 3;
FIG. 5 is a flow chart showing the procedure of the update processing by the print style sheet update unit of the printing apparatus shown in FIG. 2;
FIG. 6 is a diagram showing another example of the print result in the case where a printing apparatus that is not specified by the printing apparatus information prints print data shown in FIG. 3;
FIG. 7 is a flow chart showing the operation of the content presentation system shown in FIG. 1 and FIG. 2;
FIG. 8 is a communication sequence diagram in the content presentation system shown in FIG. 1 and FIG. 2;
FIG. 9 is a block diagram showing the structure of the content presentation system in a second embodiment;
FIG. 10 is a flow chart of the operation of the whole content presentation system shown in FIG. 9;
FIG. 11 is a block diagram showing the structure of the content presentation system in a third embodiment;
FIG. 12 is a flow chart showing the structure of the content presentation system shown in FIG. 11;
FIG. 13 is a block diagram showing the structure of the content presentation system of a fourth embodiment;
FIG. 14 is a flow chart showing the operation of the whole content presentation system shown in FIG. 13; and
FIG. 15 is a block diagram showing the structure of the content presentation system of a fifth embodiment.

### Best Mode for Carrying Out the Invention

Embodiments of the present invention will be explained in detail with reference to figures.

### (First Embodiment)

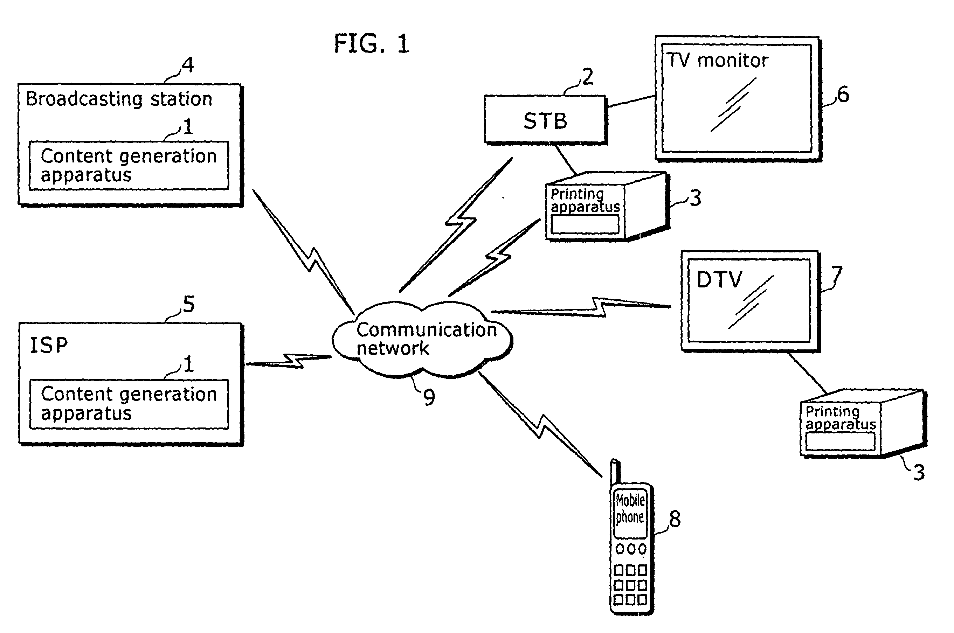

FIG. 1 is a block diagram showing the outline structure of the content present system 100 of this embodiment. The content presentation system 100 is the system that presents the descriptions of the delivered contents to a user by printing or displaying. The content printing and displaying system is the one where the print contents are printed in a print style that approximately the same as the print style previously set at a delivering side, that is, the uniqueness of the print style is guaranteed, in the case where the printing apparatus at the receiving side is not the one expected at the sending side, while display contents are displayed in a display style that approximately the same as the display style expected at the delivering side, that is, the uniqueness is guaranteed, even in the case where the display apparatus at the receiving side is not the display apparatus expected at the sending side. The content presentation system 100 like this includes a Set Top Box (STB) 2, a printing apparatus 3, a broadcasting station 4, an Internet Service Provider (ISP) 5, a TV monitor 6, a DTV 7, a mobile phone 8 and a communication network 9. The broadcasting station 4 and the ISP5 includes a content generation apparatus 1 respectively.

The content generation apparatus 1 generates various kinds of contents such as the display content and the print content delivered to the TV monitors 6 or the DTVs 7 of respective homes via TV broadcasting or the web pages on the Internet. Each print content for printing out these contents includes several printing apparatus that are conceived to be used at receiving side. The content generation apparatus 1 generates print style sheets for the respective previously-conceived printing apparatuses and print control information attaching, to the generated printing sheet, the printing apparatus information for specifying a target model of the printing apparatus. Note that the printing apparatus information is an example of the print specification information concerning the print specification that is previously defined so as to guarantee the uniqueness of the page layout of the print data.

Here, the print style sheet is the data that specifies the print style of the print data using parameters such as a font type, a font size, a character color, a width between lines, a paper size, a printing direction, the number of characters in a line, the number of lines in a page, light, left, upper and lower margins, an underline, a modification and the like. This is true of the display style sheet. Further, the print contents are generated by attaching the generated print control information to the print data that presents the text of the contents. This is true of each of the display contents for display. The display style sheets are generated by conceiving several display apparatuses to be used at the receiving side and then the display control information is generated by attaching, to the generated display style sheet, the display apparatus information that specifies the target model of the display apparatus. Further, the display contents are generated by attaching the generated display control information to the display data that presents the text of the contents.

The STB 2 is a communication terminal having functions for receiving the print contents and the displaying contents from the broadcasting station 4 and the ISP5, displaying the displaying contents on the TV monitor 6 connected to the STB 2, and making the printing apparatus 3 connected to the STB 2 print the print contents. At that time, the STB 2 checks whether the printing apparatus 3 is the model shown by the printing apparatus information in the print contents or not and judges that update of the print style sheet is unnecessary in the case where it is the model. In contrast, in the case where the printing apparatus 3 is not the model shown by the printing apparatus information, it judges that update of the print style sheet is necessary. The STB 2 notifies the printing apparatus 3 of this judgment result of "update unnecessary" or "update necessary" and outputs, to the printing apparatus 3, the print style sheet included in the print contents and the print data.

The displaying contents is approximately true of the above-mentioned case, but it differs in that the STB 2 not only judges the necessity of updating the display style sheet but also update the display style sheet according to the judgment result. More specifically, the STB 2 checks whether the model shown by the display apparatus information in the display content is the TV monitor 6 or not and outputs the display data on the TV monitor 6 according to the display style sheet included in the display contents in the case where it is the TV monitor 6. On the other hand, in the case where it is not the TV monitor 6, the STB 2 updates the display style sheet by changing the font type, the font size, upper, lower, light and left margins and the like so that the number of lines in a page and the number of characters in a line that have been described in the display style sheet are realized in the display result on the TV monitor 6 and outputs the displayed data on the TV monitor 6 according to the display style sheet after the update.

The printing apparatus 3 sends the specification information concerning the specifications of its print outputs along with the printing apparatus information for specifying its model including a maker code, a printing apparatus code, a model code and a model number at the time of being connected to the STB 2. After that, in the case where it receives a notification that the update of the print style sheet is necessary from the STB 2, it updates the print style sheet to be inputted from the STB 2 in response to this notification, and prints the inputted print data along with the print style sheet according to the print style sheet after the update. More specifically, it updates the print style sheet by changing the font type, the font size, the margins and the like in a way that the print result of the print data realizes the same number of lines in a page and the same number of characters in a line that are described in the inputted print style sheet. In the case where a notification that the update of the print style sheet is necessary is not received from the STB 2, the print data outputted from the STB 2 is printed according to the print style sheet. The broadcasting station 4 delivers the various contents generated by the content generation apparatus 1 via a ground wave, the TV broadcasting such as Broadcasting Satellite (BS) and Communication Satellite (CS) or the Internet and the like. The ISP5 is the server that delivers the IP address to, for example, the STB 2 connected to the Internet, delivers various contents generated by the content generation apparatus 1 and provides services on the Internet.

The TV monitor 6 sends the display specification information concerning the specifications of its display outputs to the STB 2 along with the printing apparatus information for specifying its model including the maker code, the TV code, the model code, and the model number. After that, the display data inputted from the STB 2 is displayed. The DTV7 is a digital television including a function of the STB 2 and to which an external printing apparatus 3 is connected. The mobile phone 8 is a mobile phone with a similar display function to the STB 2, it connects to the Internet using a mobile phone circuit net, receives the display contents from, for example, the ISP5, and displays the display data of the display contents on a liquid crystal panel and the like. More specifically, the mobile phone 8 checks whether the model shown by the display apparatus information in the display contents is the mobile phone 8 or not based on the received display contents, and displays the display data according to the display style sheet included in the display contents in the case where it is the mobile phone 8. However, in the case where the model shown in the display apparatus information is not the mobile phone 8, it updates the display style sheet by changing the font type, the font size, and the like in a way the number of lines in a page and the number of characters in a line described in the display style sheet can be realized in the display result on the liquid display panel and displays the display data according to the display style sheet after the update. The communication network 9 is a data transmission path such as TV broadcasting, a mobile phone circuit network and the Internet.

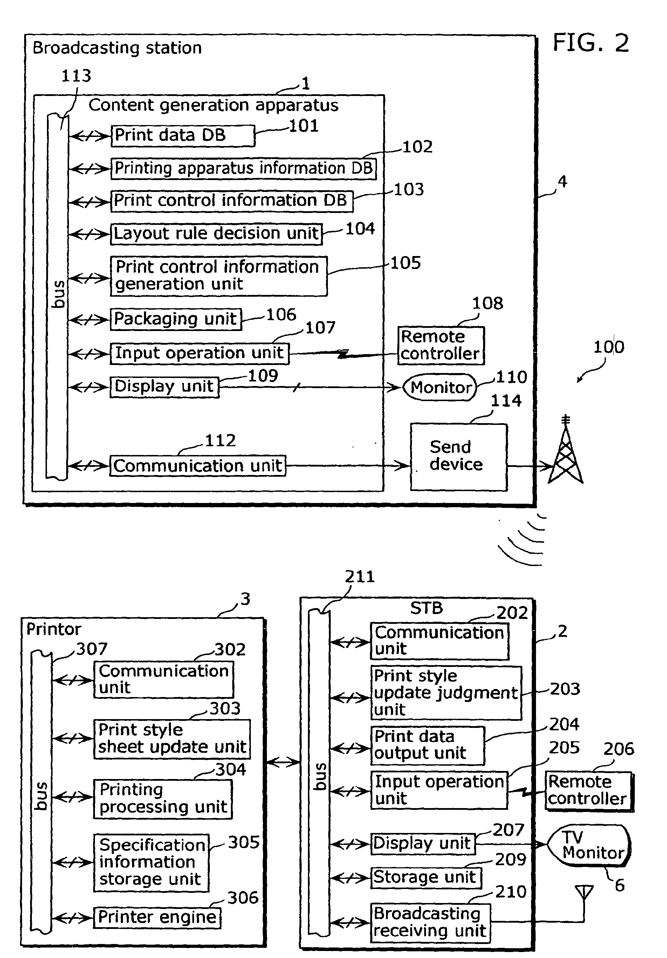

FIG. 2 is a block diagram showing more detailed structure of each apparatus in the content presentation system 100 shown in FIG. 1. As illustrated by the above explanation, as the printing processing of the print contents in the content presentation system 100 is similar to the display processing of the displaying contents, the printing processing of the print contents will be explained as an example. Also, as to the units that have already been explained, the same reference numbers are assigned to these units and explanations on the units will be omitted.

### <broadcasting station>

The broadcasting station 4 includes a content generation apparatus 1, a remote controller 108, a monitor 110 and a sending apparatus 114. The content generation apparatus 1 includes roughly ( i ) three Data Bases (DB): a print data DB 101, a printing apparatus information DB 102 and a print control information DB 103 that are realized in a form of a hard disc and the like and ( ii ) six processing units: a layout rule decision unit 104, a print control information generation unit 105, a packaging unit 106, an input operation unit 107, a display unit 109 and a communication unit 112 that are realized in a form of a CPU and the like and (iii) a bus 113.

The print data DB 101 stores the print data such as character information and broadcasting mail in the content previously generated as a character file. The printing apparatus information DB 102 stores the printing apparatus information including a maker code for specifying each model, a printing apparatus code, a model code, a model number and the like and the information concerning the specifications of print outputs of each model concerning each of the respective models of plural printing apparatuses. The print control information DB 103 is the storage area for storing the print control information generated by the print control information generation unit 105.

The layout rule decision unit 104 decides the layout rule for each printing apparatus or each model of the printing apparatus based on the specifications concerning the print outputs of various printing apparatuses stored in the printing apparatus information DB 102. The layout rule is the rule for prescribing the selection range of values such as various parameters described in the print style sheet, for example, a font type, a font size, a character color, a width between lines, a paper size, a printing direction, the number of characters in a line, the number of lines in a page, light, left, upper and lower margins, an underline, a modification and the like. In contrast, the print style is a character sequence including the print data and an image layout in the printing paper, while a print style sheet is the one to which the character sequence and the print data are described using these parameter values.

The print control information generation unit 105 selects parameters based on the common part of the layout rule decided by the layout rule decision unit 104, and sets the print style in a way that the print style is always guaranteed for the specific printing apparatuses or the models of the printing apparatuses at the time of printing each print data in the print data DB 101. Next, common print style sheets are generated for the printing apparatuses or the models of the printing apparatuses showing the set print styles. In addition, it generates the printing apparatus information for specifying the printing apparatuses or the models of the printing apparatuses whose print styles are guaranteed and the print control information including the generated print style sheets.

Next, it stores the generated print control information and the print data in the print data DB 101 that are associated with each other in the print control information DB 103.

The packaging unit 106 generates the print contents where the print data in the print data DB 101 and the print control information in the print control information DB 103 corresponding to this are associated with each other. Here, it generates the print contents where the print data and the corresponding print control information are packaged into one. The input operation unit 107 receives the inputs from a remote controller 108 or keyboards that is not shown and the like. The remote controller 108 is an external apparatus exclusive for the content generation apparatus 1, and is used for inputting the operator's operations into the input operation unit 107 of the content generation apparatus 1 using infrared rays or the like. The display unit 109 generates the display image data such as a menu display screen in the case of input to the input operation unit 107 by the operator operating the remote controller 108 or the keyboards or the like that are not shown. The monitor 110 is, for example, a CRT display or a liquid display panel or the like that is connected to the content generation apparatus 1 and is used for displaying the display image data inputted from the display unit 109.

The communication unit 112 includes a LAN interface or the like for connecting to a Wide Area Network (written as WAN from here) or a Local Area Network (written as LAN from here), and a function for communicating with an external apparatus of the content generation apparatus 1. The bus 113 is a parallel data transmission path for exchanging data in each unit of the content generation apparatus 1. The sending apparatus 114 sends the print contents where the print data and the print control information are packaged by the packaging unit 106 using the TV broadcasting wave.

### <STB>

The STB 2 includes roughly ( i ) a single storage unit 209 that is realized by an IC card or a hard disc, ( ii ) six processing units that are realized in a form of a CPU or the like: a communication unit 202, a print style update judgment unit 203, a print data output unit 204, an input operation unit 205, a display unit 207 and a broadcasting receiving unit 210, and is connected to an external remote controller 206 and a TV monitor 6.

The communication unit 202 includes a parallel I/F for connecting this STB 2 to the printing apparatus 3, a Universal Serial Bus (USB), an interface for the IEEE1394 bus and the like and includes a function for communicating data between the STB 2 and these external apparatuses.

The print style update judgment unit 203 is the processing unit for judging whether it is possible to obtain approximately the same print result as the print style expected at the content generation side, that is, the uniqueness is guaranteed, in the case where the print data in the print contents are printed according to the print style sheet included in the print control information using the printing apparatus 3 connected to the STB 2. As to more specific judgment method, the print contents temporally stored in the storage unit 209 are unpackaged, and the print data and the print control information are stored in another storage area in the storage unit 209. Further, the print style sheet and the printing apparatus information are extracted from the print control information stored in the storage unit 209. Next, it inputs the specification information concerning the print inputs of the printing apparatus 3 from the printing apparatus 3 connected to the STB 2, compares the inputted specification information with the extracted printing apparatus information. And then, it judges that update of the print style sheet is unnecessary in the case where the printing apparatus shown in the printing apparatus information or the model of the printing apparatus is the printing apparatus 3, while it judges that update of the print style sheet is necessary in the case where the printing apparatus shown in the printing apparatus information or the model of the printing apparatus is not the printing apparatus 3.

The print data output unit 204 sends, to the printing apparatus 3, the judgment notification in the print style update judgment unit 203, the print data and the print style sheet via the communication unit 202. The input operation unit 205 receives the inputs such as print instructions according to the user operations by the remote controller 206 corresponding to the menu display screen of the display unit 207 guiding the inputs of the print instructions of the print contents. The remote controller 206 is an external apparatus exclusive for the STB 2 and has a similar function as the remote controller 108 of the broadcasting station 4 except that it inputs the user's operation into the input operation unit 205. The display unit 207 generates the display image data of the broadcasting data received by the broadcasting receiving unit 210 or the menu display screen in the case where a user inputs data in the input operation unit 205 by operating the remote controller 206 or the like. The storage unit 209 stores the print contents received by the broadcasting receiving unit 210. The broadcasting receiving unit 210 receives, from the broadcasting station 4, the print contents that are packaged by the packaging unit 106 of the content generation apparatus 1. The bus 211 is a parallel data transmission path for exchanging the data in each unit of the content generation apparatus 1.

### <printing apparatus>

The printing apparatus 3 is an apparatus for receiving the print contents from the STB 2 and printing the print data included in the received print contents according to the print style sheet. Note that, in the case where there is a notification that update of the print style sheet is necessary from the STB 2, it updates the print style sheet according to the specifications of the printing apparatus 3 in a way that the print style that is set in the content generation apparatus 1 approximately matches the print style for the printing apparatus 3, that is, the uniqueness is guaranteed, and prints the print data according to the updated print style sheet. The printing apparatus 3 like this includes a communication unit 302, a print style sheet update unit 303, a printing processing unit 304, a specification information storage unit 305, a printing apparatus engine 306 and a bus 307.

The communication unit 302 includes a parallel I/F, a USB or an interface for the IEEE 1394 bus, and has a function for communicating with the external apparatus of the printing apparatus 3 such as the STB 2. The communication unit 302 receives the print data and the print style sheet that are extracted from the print contents in the STB 2, and also receives the judgment result as to whether the print style sheet should be updated. The print style sheet update unit 303 updates the print style sheet by changing the font type, the font size, the margins and the like that are described in the print style sheet in a way that the print data in the print contents is printed within the number of lines in a page and the number of characters in a line that are described in a print style sheet in the print content.

For example, in the case where the printing apparatus 3 does not handle MS Maru Gothic and prints the print data using the MS Gothic as a substitute on condition that it is prescribed that the print data is printed using MS Maru Gothic, the print style sheet update unit 303 changes the character space in a way that the number of characters that can be included in a single line of the printing paper is guaranteed and these characters have an equal space. Also, in the case where the number of papers used for printing is plural, the number of lines to be printed in a single paper becomes equal to each other, and the line space is changed in a way that the printing style is not affected. Further, in the case where images such as JPEG, GIF and BMP are inserted into the print data, character space is changed placing a priority on the arrangement of the character string, and these images are scaled up or down according to the change of the space into which these images are inserted.

The printing processing unit 304, after spooling the print data (continuing the printing processing without delay by using a high-speed auxiliary storage as a buffer), rasterizes the corresponding print data according to the print style sheet so as to output the print data to the printing apparatus engine 306. The specification information storage unit 305 is a memory realized in a form of a ROM, a flash memory, an IC card and the like, and previously stores ( i ) information concerning the apparatus such as a maker code, a printing apparatus code, a model code, a model number and the like of the printing apparatus 3, and ( ii ) information concerning the specifications for printing such as font types, font sizes, printing character sizes for the respective font sizes corresponding to the respective font types, printable paper sizes, kinds of character colors, setting ranges of character space, setting ranges of line space, printable ranges (the operating range of the printing apparatus head and the operating range of paper feed mechanism). The printing apparatus engine 306 is a control circuit and the machine operation unit for printing the print data from the printing processing unit 304. The printing apparatus engine 306 may employ one of various kinds of printing methods such as a thermal transfer (a sublimation dye transfer and a thermal transfer), a thermal printing, an inkjet printing, an electrophotographic printing and the like, and the printing method is not limited to a particular one.

Operations of the content presentation system 100 structured like mentioned above will be explained.

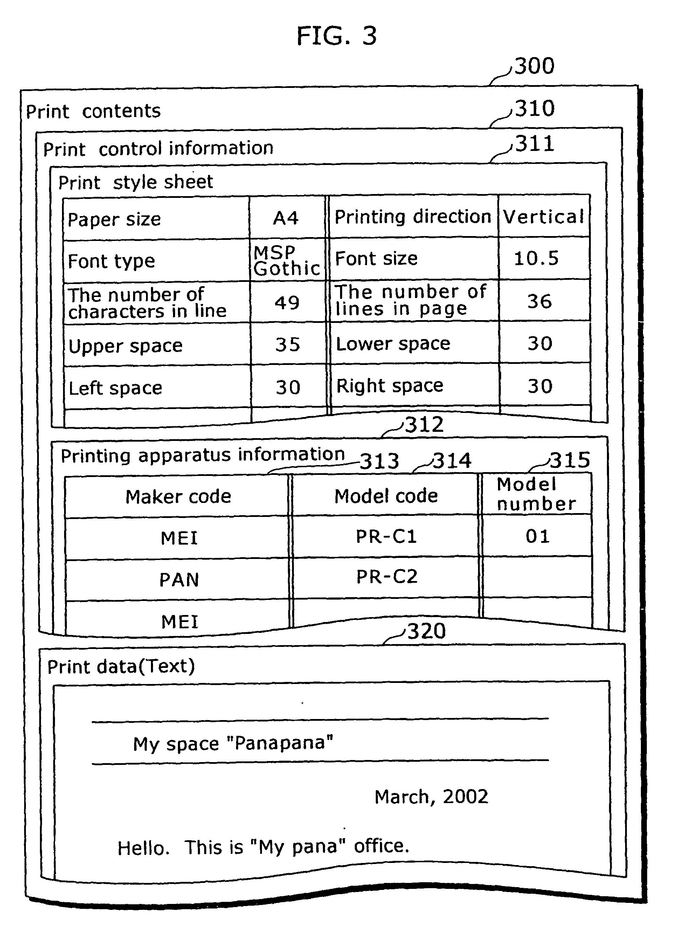

FIG. 3 is a diagram showing an example of the print content 300 to be generated by the content generation apparatus 1 shown in FIG. 1 and FIG.2. As shown in these figures, the print content 300 generated by the content generation apparatus 1 includes print control information 310 and a print data 320. The print data 320 is the data to be printed as outputs of descriptions of this print content 300, and here, for example, the text of the broadcasting mail. As shown in these figures, broadcasting mail often presents figures using symbols and characters or generates frames such as tables, but especially in most of these cases, a part of a character string for a single line goes down to the next line, which affects readability of the contents of the paper. Note that this print data 320 is not limited to broadcasting mail, it may be, for example, a mail magazine, a book delivered as a print content 300 or a greeting card or the like. Also, especially in the case where a content generation apparatus 1 is set in the ISP5, it may be an electronic mail.

The print control information 310 is the information for controlling operation of the printing apparatus 3 in order to print the print data 320 in the print content 300, and is not printed as outputs of the descriptions of the print content 300. This print control information 310 further includes a print style sheet 311 and a printing apparatus information 312.

The print style sheet 311 is a printing format that is set in the content generation apparatus 1 so as to print the print data 320, and the information for controlling the printing apparatus head of the printing apparatus engine 306. In the print style sheet 311, parameters such as a paper size, a printing direction, a font type, a font size, the number of characters in a line, the number of lines in a page, the upper margin, the lower margin, the left margin, the right margin and the like are described. More specifically, this print style sheet 311 shows that the printing apparatus 3 uses A4 size papers and prints along the long side of the paper at the time of printing this print data 320. It also shows that it is printed using 10.5 point MSP Gothic is used as the font, 49 characters can be printed in a line, and 36 lines can be printed in a page. Further, it shows that the upper margin and the lower margin are 35mm and 30mm respectively, and both of the left margin and the right margin are 30mm.

However, depending on which maker, type or model is used as the printing apparatus 3, the printing apparatus 3 cannot perform printing as specified by the print style sheet 311, for example, it cannot have the font specified by this print style sheet 311 or it cannot have margins as specified because of the structural problem of the paper feed unit. In the case of the printing apparatus 3 that only have larger fonts than the fonts specified by the print style sheet 311, printing the print data 320 corresponding to the print style sheet 311 using the larger font in a way that 49 characters are placed in a line according to the corresponding print style sheet 311 enlarges the print width and thus the 30mm right margin becomes narrower. Further, the difference between the specified font size and the font size that is set in the printing apparatus 3 becomes big, some of 49 characters may not be included in a line and a part of the character string goes down to the next line.

In order to prevent this from occurring, the print control information 310 includes the printing apparatus information 312 showing the printing apparatus that can at least print all the number of lines in a page specified by the print style sheet 311 preventing a part of lines from being printed on the next page although some difference may be generated in the case where printing is performed according to this print style sheet 311. A maker code 313 that specifies the printing apparatus, the model code 314, the model number 315 and the like are described in the printing apparatus information 312. In other words, the printing apparatus information 312 shows that, at least, 49 characters can be printed in a line, and 36 lines can be printed in a page in the case where the printing apparatus 3 is the one specified by the maker code 313 "MEI", the model code 314 "PR-C1" and the model number 315 "01", and the print data 320 is printed according to the print style sheet 311 as it is, at least, 49 characters can be printed in a line, and 36 lines can be printed in a page.

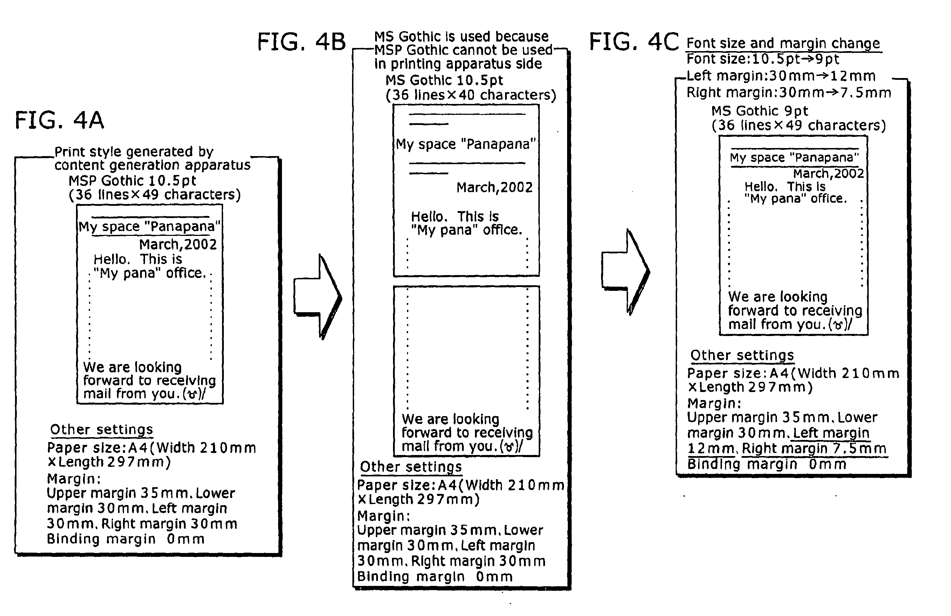

FIG. 4 is a diagram showing an example of the print result in the case where the print data 320 shown in FIG. 3 is printed by the printing apparatus that is not specified by the printing apparatus information 312. FIG. 4A is a diagram showing the print style of the print data 320 generated in the content generation apparatus 1. FIG. 4B is a diagram showing the print result in the case where another font is used as a substitute for a font of MSP Gothic. FIG. 4C is a diagram showing the print result in the case where the printing apparatus 3 of this embodiment updates the print style sheet 311 using a substitute font. For example, in this case, as shown in FIG. 4A, the print style sheet 311 is made so that the print outputs of the print data 320 is within one paper in length in the case of printing the print data 320 using 10.5 point MSP Gothic, and in a way that 49 characters are printed in a line and 36 lines are printed in the page of an A4 paper. This print style sheet 311 is described using parameters selected within the common layout rule for the specific printing apparatuses that are previously conceived by the content generating side. In other words, the layout rule is generated placing character strings in a way that the specified printing apparatuses can always print the print data in a good-looking way.

When the print data 320 and the print style sheet 311 like these are inputted into a printing apparatus that is not specified by the printing apparatus information 312 shown in FIG. 3, the conventional printing apparatus that does not have the MSP Gothic specified by the print style sheet 311 prints the data using, for example, the MS Gothic that is previously determined as a font to be used. Even in the case where a substitute font used in this way is the same 10.5 point font, the printed or displayed character size may be different depending on the font type. On condition that the data is printed using the substitute font like this, that is, MS Gothic here, according to the print style sheet 311, there emerges no problem in the case where the character size of the substitute font is smaller than the character size of the specified font, but, in the case where the character size of the substitute font is larger as shown in FIG. 4B, for example, only 40 characters can be printed, but the rest 9 characters are printed in he next line, and a line feed occurs just after the 9 characters, although 49 characters should be printed in a line. In this way, each line exceeding the above-mentioned 40 characters are divided into two lines, as a result, the readability of the sentences is badly affected and extra printing paper is wasted.

In this case, the printing apparatus 3 of this embodiment prints the print data 320 using a substitute font like the conventional printing apparatus in the case where it does not handle the font specified by the print style sheet 311 after it updates the print style sheet 311 according to the notification that the print style sheet 311 from the STB 2 needs to be updated. More specifically, the printing apparatus 3 compares the character size of the specified font with the character size of the substitute font, and in the case where the character size of the substitute font is bigger, it changes the font size of the substitute font to a smaller size so that the number of characters in a line and the number of lines in a page that are specified by the print style sheet 311 can be printed in a resulting page. Further, the upper, the lower, the left and the right margins are adjusted. Printing the print data 320 using the print style sheet 311 updated in this way reduces the left margin to 12mm and the right margin to 7.5mm, but, as shown in FIG. 4C, it is possible to print 49 characters in a line of an A4 paper, 36 lines in an A4 paper as an output to a paper using MS Gothic whose font size is 9 point. In this way, with the printing apparatus 3 of this embodiment, as for the appearance of the print result, updating the print style sheet 311 makes it possible to print the print data 320 in the approximately uniqueness style as the print style conceived by the broadcasting station 4 side, although it is slightly different, in the respects of font types and sizes, and left and right margins, from the print style conceived by the broadcasting station 4 shown in FIG. 4A.

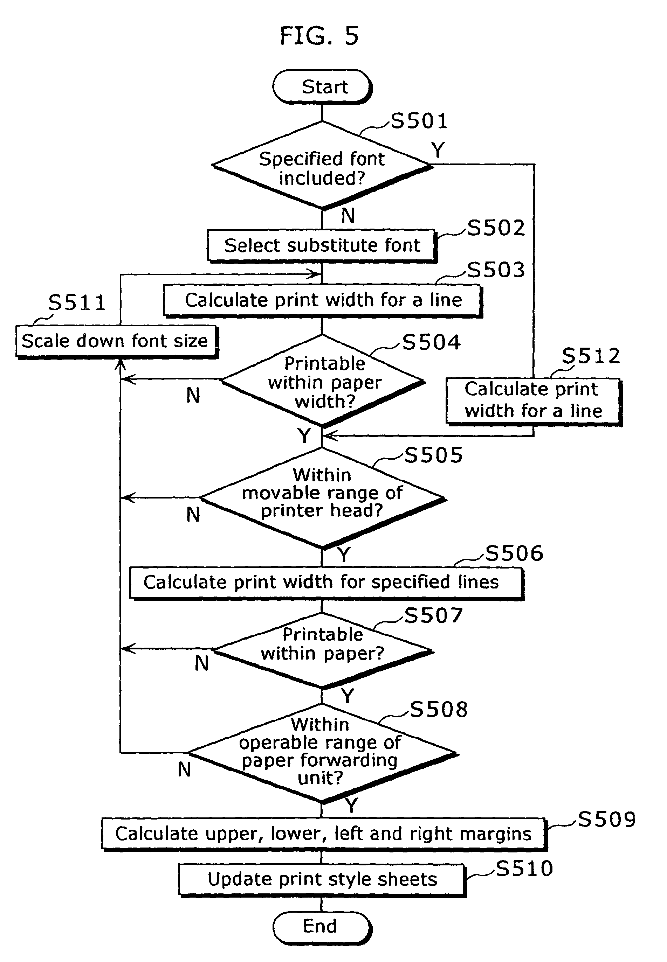

FIG. 5 is a flow chart showing the procedure of the update processing by the print style sheet update unit 303 of the printing apparatus 3 shown in FIG. 2. The print style sheet update unit 303 judges whether the printing apparatus 3 handles the font specified by the print style sheet 311 (S501) by comparing the specification information stored in the specification information storage unit 305 with each parameter specified in the print style sheet 311. In the case of the example shown in FIG. 4, it is judged that MSP Gothic that is the specified font cannot be handled. In the case where a specified font cannot be handled, the print style sheet update unit 303 checks the specification information in the specification information storage unit 305 and selects a font that substitutes the specified font from the fonts that can be handled by the printing apparatus 3 (S502). More specifically, in the case where the printing apparatus 3 handles a plurality of fonts, the print style sheet update unit 303 decides to use another Gothic font such as MS Gothic that can be handled by the printing apparatus 3. Also, in the case where the specified font is, for example, MSP Mincho, it decides to use another Mincho font such as MS Mincho that can be handled by the printing apparatus 3.

In the case where the printing apparatus 3 handles the font specified by the print style sheet 311, it calculates the print width for a line based on the character size of the specified font and the specified number of characters in a line (S512) and goes on to the judgment processing whether the print width obtained as the calculation result is within the operational range of the printing apparatus head (S505).

In addition, the print style sheet update unit 303 calculates the print width for a line based on the character size of the substitute font and the number of characters in a line specified by the print style sheet (S503). In this case, it calculates the print width for a line in the case of printing 49 characters in a line based on the character size of MS Gothic. Next, it judges whether it can perform printing in a way that the print width for a line does not exceed the paper width based on the print width for a line obtained as the calculation result and the paper width of the form that is previously stored (S504). In the case of the example shown in FIG. 4, it judges whether it can perform printing in a way that the print width for a line does not exceed the paper width. In the case where it judges that it can print the line in the paper, it further checks whether the print width for a line exceeds the operational range of the printing apparatus head or not based on the A4 paper size that is previously stored and the operational range of the printing apparatus head shown by the specification information (S505).

In the case where the print width for a line exceeds the paper width as a check result, or in the case where the print width for a line exceeds the operational range of the printing apparatus head, the print style sheet update unit 303 changes the font size to a one-step smaller one without changing the font type (S511), calculates the print width for a line again (S503), judges whether it can print the line within the paper width (S504) and whether it can print characters that should be placed in a line within the line (S505) and repeats this processing until it can perform printing without any problem. In the example shown in FIG. 4, in the case where the print width for a line exceeds the paper width or the operational range of the printing apparatus head, the print style sheet update unit 303 changes the size of the font to be used to, for example, 9 points that is one-step smaller than 10.5 points. The print style sheet update unit 303, after changing the font size, calculates the print width for a line in the case where 49 characters are printed in a line using 9 point MS Gothic, checks whether the print width for a line exceeds the width of an A4 paper, and further checks whether the print width for a line exceeds the operational range of the printing apparatus head or not.

As a result of the check, in the case where the print width for a line does neither exceed the paper width nor the operational range of the printing apparatus head, it goes on to the check in the case of the long side of the paper. The print style sheet update unit 303 calculates the print width in the long side of the paper based on the character size of the font to be used and the specified number of the lines in a page (S506), checks whether the calculated print width exceeds the length of the long side of the paper (S507) and further checks whether the calculated print width is within the operational range of the paper feed unit of the printing apparatus 3 (S508). For example, in the example shown in FIG. 4, it calculates the print width in the long side of the paper in the case where it prints 36 lines using 9 point MS Gothic, checks whether or not the print width needed for the 36 lines exceeds the length of the long side of the A4 paper, and further checks whether or not the print width needed for the 36 lines exceeds the operational range of the paper feed unit. As a result of the check, in the case where the print width of the long side of the paper exceeds the length of the long side of the paper or the operational range of the paper feed unit, the print style sheet update unit 303 returns to the processing of step S511, and changes the font size to one-step smaller size without changing the font type (S511). After changing the font size, the print style sheet update unit 303 judges whether it can print the specified number of lines on the paper again (S504 to S508), and reduces the font size to the size that enables printing, on the specified paper, the specified number of characters for a line and the specified number of lines for a page.

In this way, the print style sheet update unit 303 gradually reduces the font size until it judges that it can print the specified number of characters for a line and lines for a page on the specified paper, and then decides the upper, lower, left and right margins in a page in the case where it performs printing using the font (S509). For example, in the example shown in FIG. 4, the print style sheet update unit 303 sets the left margin and the lower margin at the respective minimum numbers that are previously set based on the operational ranges of the printing apparatus head and the paper feed unit, and calculates the right margin and the upper margin based on the paper width and the print width of the long and short sides of the paper. Further, it overwrites the parameters with the after-change parameters which are the font types, the font sizes and the upper, lower, left and right margins in the print style sheet changed in this way (S510).

As mentioned above, in the case where the printing apparatus 3 handles a plurality of fonts and does not handle the font specified by the print style sheet, the print style sheet update unit 303 not only substitutes the same font as the specified one or a similar font to the specified one, for example, another MS Gothic or the like in the case where the specified font is MSP Gothic and another MS Mincho or the like in the case where the specified font is MSP Mincho but also gradually reduces the font size until it judges that it can print, on the specified paper, the specified number of characters for a line and the specified number of lines for a page using the substitute font. Therefore, there is an effect that it can execute printing the print data in a print style nearer to the initially set print style.

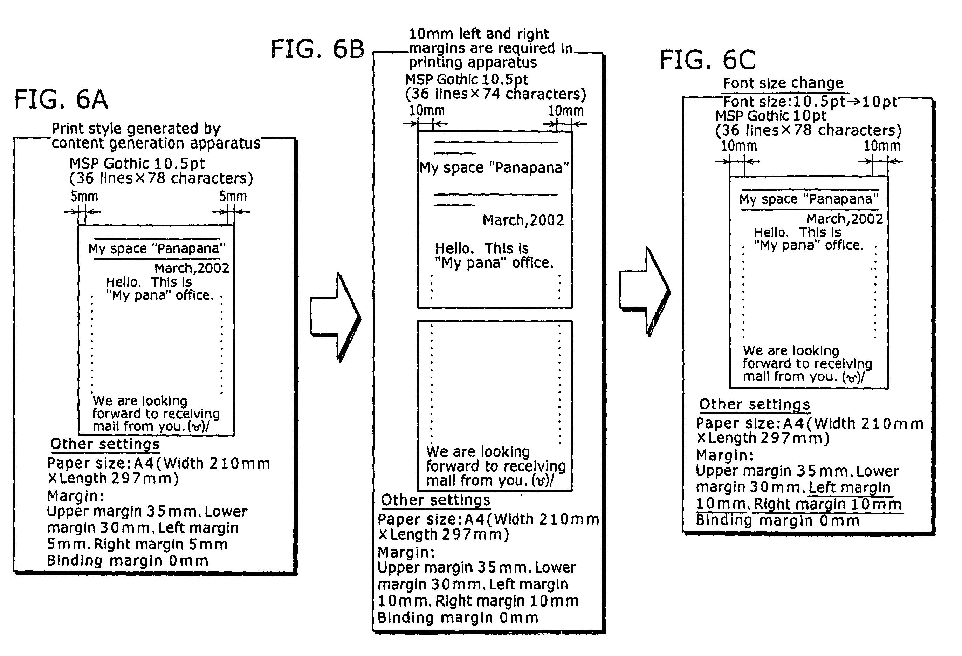

FIG. 6 is a diagram showing another example of the print result in the case where the print data 320 shown in FIG. 3 is printed using a printing apparatus that is not specified by the printing apparatus information 312. FIG. 6A is a diagram showing the print style of the print data 320 generated in the content generation apparatus 1. FIG. 6B is a diagram showing the print result in the case where printing is performed enlarging the left and the right margins. FIG. 6C is a diagram showing the print result in the case where the font size is changed and the print style sheet 311 is updated in the printing apparatus 3 of the present invention. Note that the print style sheet used when printing this print data 320 differs from the print style sheet 311 shown in FIG. 3 in that the number of characters for a line is 78 and in that both of the left and the right margins are 5mm. In this case as an example, the print style sheet is made in a way that its print output requires just a paper in the case of printing the print data 320 on an A4 paper laying out 78 characters in a line and 36 lines in a page using 10.5 point MSP Gothic as shown in FIG. 6A.

In the case where the print data 320 and the print style sheet like this are inputted to the printing apparatus that cannot perform printing leaving 10mm left and right margins on an A4 paper because it has a printing apparatus head with a narrow operational range, the printing apparatus executes printing leaving, for example 10mm left and right margins. In the case of enlarging the left and right margins in this way, only 74 characters can be printed and the remaining four characters are printed on the next line like shown in FIG. 6B and a page break occurs just after the 4 characters although 78 characters can be printed in a line in the case of the margins specified by the print style sheet. In this way, like in the case of the example shown in FIG. 4B, respective lines that exceed 74 characters are divided into two lines in printing, which badly affects the readability of the sentences and wastes extra printing paper.

In this case, the printing apparatus 3 of this embodiment updates the print style sheet using the procedure of the flow chart shown in FIG. 5 according to the update notification of the print style sheet from the STB 2. More specifically, the printing apparatus 3 calculates the print width in the case where 78 characters are printed in a line using 0.5 point MSP Gothic (S512), and checks whether the calculated print width is within the operational range of the printing apparatus head of the printing apparatus 3 (S508). As a result of the check, in the case where it exceeds the operational range of the printing apparatus head, the font size is changed into a one-step smaller one without changing the font type (S511), checks whether the print width for a line is within the operational range of the printing apparatus head again, and reduces the font size until the print width for a line reaches the operational range of the printing apparatus head. As a result of this, as shown in FIG. 6C, it is possible to print, as a print output for just a single paper, 78 characters in a line and 36 lines in a page on an A4 paper using MSP Gothic whose font size is 10 point. In this way, with the printing apparatus 3 of this embodiment, updating the print style sheet so as to print the print data 320, as a print output for a single paper, the specified number of characters in a line and the specified number of lines in a page enables printing the print data 320 in the print style that approximately matches the print style, as the appearance of the print result, conceived by the broadcasting station 4 side although the print style conceived by the broadcasting station 4 side has some differences in respects of the font size, the left and right margins and the like.

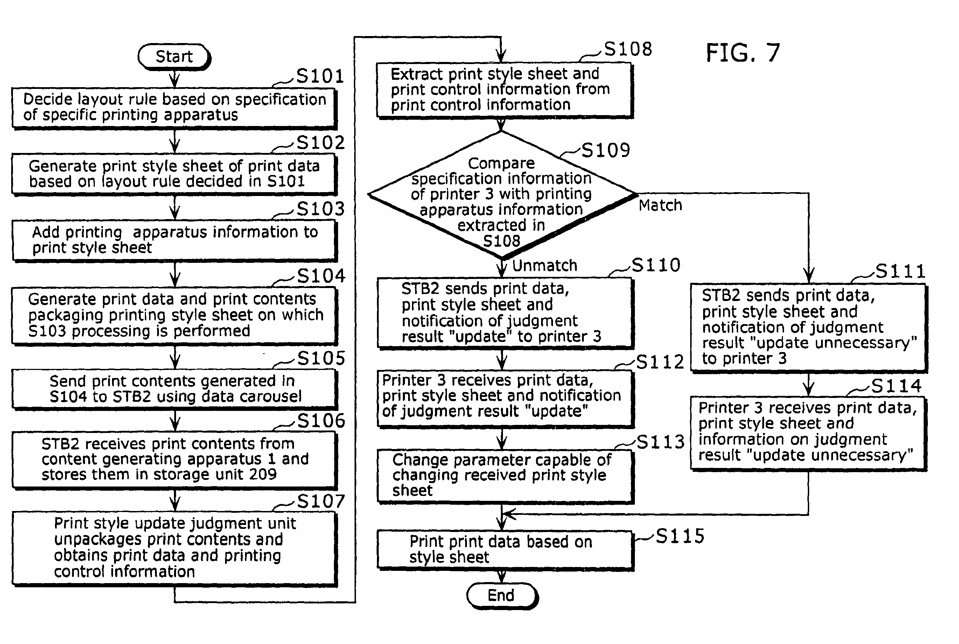

FIG. 7 is a flow chart showing the operation of the whole content presentation system 100 shown in FIG. 1 and FIG. 2. First, the layout rule decision unit 104 of the content generation apparatus 1 in the broadcasting station 4 decides the layout rule corresponding to some printing apparatuses based on the printing apparatus information in the printing apparatus information DB102 (S101). The print control information generation unit 105 of the content generation apparatus 1 generates the print style sheet of the print data in the print data DB 101 based on the layout rule decided in the step S101 (S102), and generates the print control information where the print style sheet generated in step S102 and the printing apparatus information are synthesized (S103). The packaging unit 106 of the content generation apparatus 1 generates a printing content where the print content where the print style sheet on which the processing of the step S103 is performed and the print data in the print data DB 101 are packaged (S104) and sends the print content generated in the step S104 to the STB 2 using the data carousel of the data broadcasting and the like via the communication unit 112 and the sending apparatus 114 (S105).

The broadcasting communication unit 210 of the STB 2 receives the print content from the content generation apparatus 1 and stores it in the storage unit 209 (S106). The print style update judgment unit 203 of the STB 2 unpackages the print content of the storage unit 209, obtains the print data and the print control information (S107) and extracts the print style sheet and the printing apparatus information from the print control information (S108). Further, the STB 2 compares the specification information of the printing apparatus 3 connected to the STB 2 with the printing apparatus information extracted in the step S108 (S109) and sends the print data, the print style sheet and the notification of "update unnecessary" as a judgment result of the print style sheet to the printing apparatus 3 via tha print data output unit 204 and the communication unit 202 in the case where the model code or the model number shown in the specification information of the printing apparatus 3 matches the model code or the model number of the printing apparatus information (S111). The printing apparatus 3 receives the print data, the print style sheet and the notification of "update unnecessary" as a judgment result that are sent in the step S111 (S114), and prints the print data based on the received print style sheet because the judgment result is "update unnecessary" (S115).

In the case where the model code or the model number shown by the specification information of the printing apparatus 3 in the step S109 does not match the model code or model number in the printing apparatus information, the STB 2 sends the print data, the print style sheet and the notification of "update" as a judgment result of the print style sheet to the printing apparatus 3 via the print data output unit 204 and the communication unit 202 (S110). The printing apparatus 3 receives the print data, the print style sheet and the notification of "update" as a judgment result that are sent in the step S110 (S112), and changes the changeable parameters of the received print style sheet based on the specification information of the printing apparatus 3 so that it can perform printing in a style that is approximately the same as the received print style sheet because the judgment result is "update" (S113). The printing apparatus 3 prints the print data based on the print style sheet changed in the step 113 (S115).

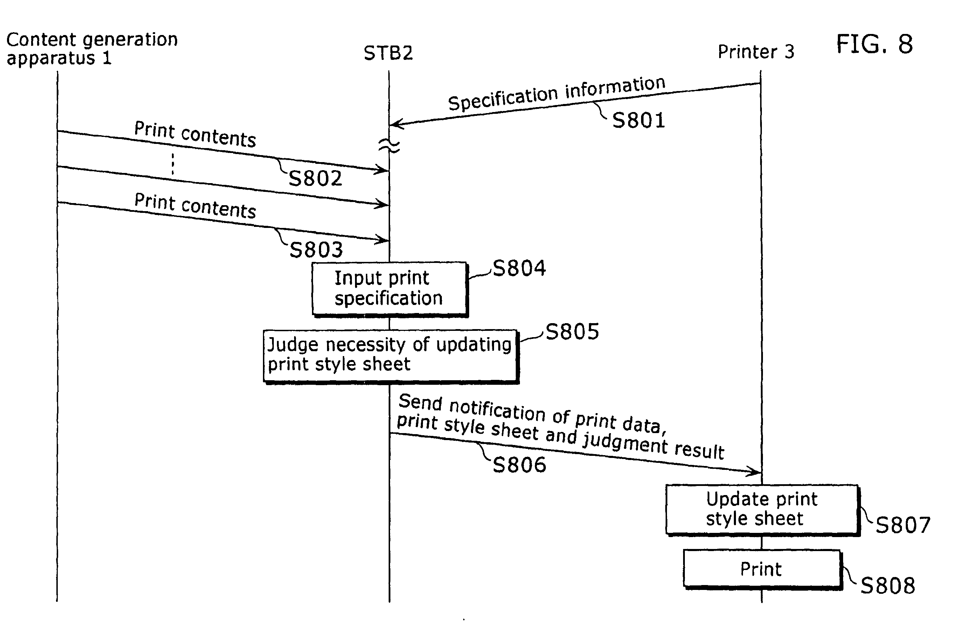

FIG. 8 is a communication sequence diagram in the content presentation system 100 shown in FIG. 1 and FIG. 2. As shown in the figure, the printing apparatus 3 sends, to the STB 2, the specification information for previously specifying the printing apparatus, model, model number of the printing apparatus 3 and the like, for example, when it is connected to the STB 2 (S801). This specification information includes the information showing the print (present) range of the printing apparatus 3 such as page margins and the like of the printing apparatus 3 that is the presentation apparatus. The page margin shows the sizes of minimum margins that are required, that is, the print operational range of the printing apparatus 3 when the printing apparatus 3 executes printing. Also, the page margin is heavily restricted by mechanical elements of the printing apparatus 3 in various kinds of print functions of the printing apparatus 3 such as the paper feed function of the printing apparatus 3 and the operational range of the printing head. Therefore, this page margin is a typical function that depends on the structure of the printing apparatus (that is, depends on the model). The STB 2 stores the specification information of the received printing apparatus 3 in the storage unit 209. After that, the print contents are delivered from the content generation apparatus 1 to the STB 2 several times (S802 and S803), but, in the case where a user does not input any print instructions in the STB 2, the received print content is stored in the storage unit 209. When receiving a print instruction from a user (S804), the STB 2 extracts the printing apparatus information from the print content corresponding to the print instruction and judges the necessity of updating the print style sheet based on the specification information stored in the extracted printing apparatus information and the storage unit 209 (S805). Next, the STB 2 sends the print data of the print contents, the print style sheet and the notification of the judgment result to the printing apparatus 3 (S806). The printing apparatus 3 that receives this updates the received print style sheet according to the notification of "update" that is the judgment result received from the STB 2 (S807) and prints the received print data according to the updated print style sheet (S808). Also, in the case where it does not update the received print style sheet according to the notification of "update unnecessary" as a judgment result received from the STB 2 (S807), it prints the print data according to the received print style sheet (S808).

As mentioned above, with the content present system 100 of this first embodiment, as it previously judges whether the update of the print style sheet in the STB 2 is necessary or not and notifies the printing apparatus 3 of the judgment result, the printing apparatus 3 can print the print data according to the print style sheet in response to the notification from the STB 2 in the case where the printing apparatus 3 does not need to update the print style sheet, and it can also print the print data comparatively fast and in a good-looking way because it updates the print style sheet only in the case where the update is necessary. Further, as the STB 2 judges whether the update of the print style sheet is necessary or not depending on whether the kind, the model, the model number and the like of the printing apparatus 3 that is connected to the STB 2 match one of the plurality of printing apparatuses types, models, model numbers and the like that are described in the printing apparatus information of the print content, there is an effect that it can obtain the judgment result more speedily because the workload needed for judging the update of the print style sheet is light.

### (Second Embodiment)

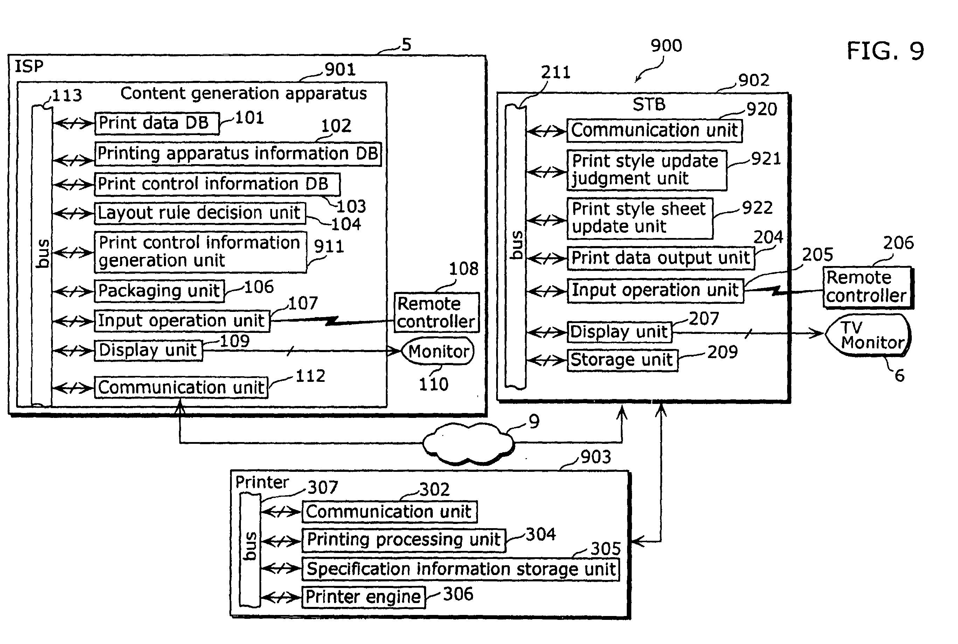

FIG. 9 is a block diagram showing the structure of the content present system 900 of the second embodiment. Note that, as to the units mentioned earlier have already been explained, the same reference numbers are assigned to the units and explanations on them will be omitted. Also, as the method for obtaining the display result of the display content for which the initial display style is mostly guaranteed is the same as the case of the print content also in this embodiment, only the case of printing will be explained.

The content present system 900 is the content presentation system where the STB judges whether the print style sheet need to be updated or not based on the print conditions in the print content and the specification information of the printing apparatus and updates the print style sheet, and includes the ISP5, the STB 902, a printing apparatus 903 and the communication network 9. The ISP5 is a server for delivering the print content or the like generated by the content generation apparatus 901 to the STB 902 connected to the communication network 9 via the Internet and has a content generation apparatus 901 inside.

The content generation apparatus 901 is a content generation apparatus for generating, instead of the printing apparatus information, the print content including the print control information where print conditions necessary for the printing apparatus to print the print data mostly according to the print style sheet. The content generation apparatus 901 includes a print data DB 101, a printing apparatus information DB 102, a print control information DB 103, a layout rule decision unit 104, a packaging unit 106, an input operation unit 107, a display unit 109, a communication unit 112 and a print control information generation unit 911, and a remote controller 108 and a monitor 110 as external apparatuses. The print control information generation unit 911 generates the print style sheet like in the case of the print control information generation unit 105 of the first embodiment, but it differs from the print control information generation unit 105 of the first embodiment in that it generates the print control information by synthesizing, with the generated print style sheet, the print conditions, instead of the above-mentioned printing apparatus information, necessary for being satisfied in order that the print style that is set in the print control information generation unit 911 is mostly guaranteed. The print conditions are, to be specific, available font information (font types and sizes), printable paper sizes, the printable range (for example, "front page", "5mm margins are required for all sides of paper", and the like).

The STB 902 is the STB that judges the necessity of the update of the print style sheet by checking whether the specifications of the print output of the connected printing apparatus satisfies the print conditions included in the print control information in the print content and has a function for updating the print style sheet according to the judgment result. The STB 902 includes a print data output unit 204, an input operation unit 205, a display unit 207, a storage unit 209, a communication unit 920, a print style update judgment unit 921 and a print style sheet update unit 922, and as external apparatuses, a TV monitor 6 and a remote controller 206. The communication unit 920 includes not only a parallel I/F, a USB, an interface for the IEEE 1394 bus or the like for connecting the STB 902 with the printing apparatus 903 but also a modem or the like for connecting the STB 902 to the communication network 9 such as the Internet and a function for communicating the data between the STB 902 and the external apparatus. The communication unit 920 differs from the communication unit 202 of the first embodiment in that it does not notify the printing apparatus 903 of the judgment result of the print style update judgment unit 921 and it sends a delivery request such as a print content to the ISP5 according to the delivery request instruction inputted by user operating a remote controller 206 or the like.

The print style update judgment unit 921 checks whether specifications of the print output of the printing apparatus 903 satisfies the print conditions extracted from the print control information or not based on the specification information of the printing apparatus 903 that is previously received from the printing apparatus 903 and stored in the storage unit 209. The specification information of the printing apparatus 903 includes, for example, character sizes of the respective fonts that can be handled by the printing apparatus 903, character sizes of other general fonts and the like. In the case where the print style update judgment unit 921 judges that the condition concerning the font type is satisfied in the case where the printing apparatus 903 handles the font type described in the print condition and in the case where it handles a font whose character size is smaller than the font size specified by the print condition. Also, as to the font size specified by the available font information, it judges that the condition concerning the font size is satisfied in the case where it handles smaller font than the one described by the print condition. Further, as to the available paper size shown by the print condition, it judges that the condition is satisfied in the case where it can use printing paper larger than the one described in the print condition. Also, as to the condition concerning the printable range, it judges that the condition is satisfied in the case where it is possible to print data in the larger range of the paper than the printable range indicated by the print condition.

As a check result obtained in this way, it judges that the print style sheet needs to be updated in the case where the print specifications of the printing apparatus 903 do not satisfy all of the print conditions, while it judges that the print style sheet does not need to be updated in the case where the print specifications of the printing apparatus 903 satisfy all of the print conditions. The print style sheet update unit 922 updates the print style sheet like the case of the print style sheet update unit 303 that is set at the printing apparatus 3 of the first embodiment.

The printing apparatus 903 is a printing apparatus that prints the print data in the print content received from the STB 902 according to the print style sheet in the print content and includes a communication unit 302, a printing processing unit 304, a specification information storage unit 305 and a printing apparatus engine 306.

The operations of the content presentation system 900 structured in the above-mentioned way will be explained.

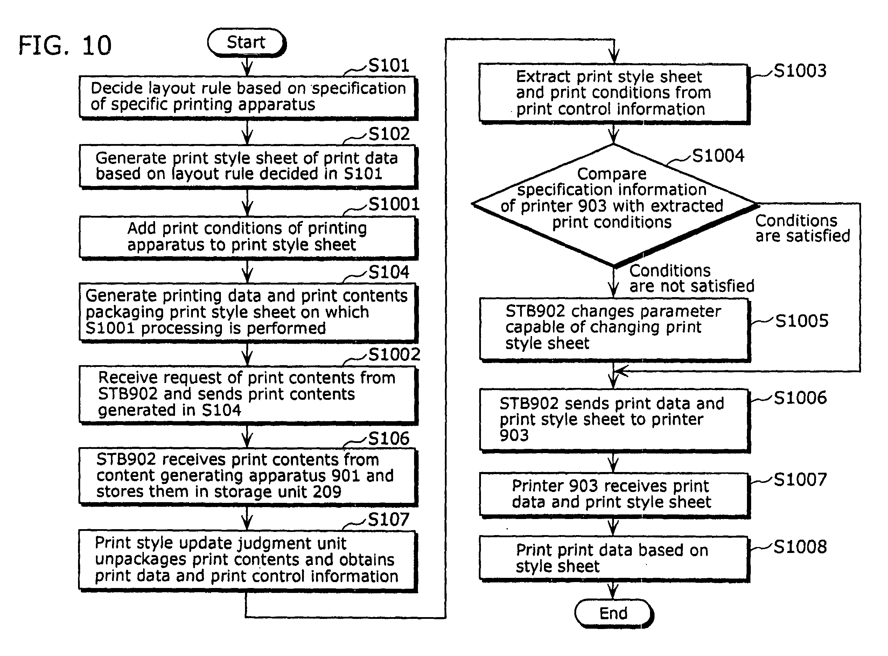

FIG. 10 is a flow chart showing the operations of the whole content presentation system 900 shown in FIG. 9. First, the processing for deciding the layout rule performed by the content generation apparatus 901 in the ISP5 (S101) and the processing for generating the print style sheet (S102) are the same as the ones in the case of the content generation apparatus 1 of the first embodiment. Next, the print control information generation unit 911 generates print control information where the print style sheet generated in the step S102 and the print conditions indicated as the available font information, the available paper sizes and the printable range (S1001). Here, the generation processing of the print control information in the step S1001 will be explained in detail with reference to an example of FIG. 4. The print control information generation unit 911 of the content generation apparatus 901 generates print conditions indicating that ( i ), as the available font information, the font type to be used for the print style sheet is MSP Gothic; and the font size to be used for the print style sheet is 10.5 point, ( ii ) the available paper size is A4, and ( iii ) the printable range is "not specified", and synthesizes print conditions with the print style sheet so as to generate the print control information.

The packaging unit 106 of the content generation apparatus 901 generates the print content where the print style sheet on which the processing in the step S1001 is performed and the print data in the print data DB 101 are packaged (S104), and sends the print content generated in the step S104 to the STB 902 via the communication unit 112 and the communication network 9 in response to the print content delivery request from the STB 902 (S1002).

The communication unit 920 of the STB 902 receives the print content from the content generation apparatus 901 and stores it in the storage unit 209 (S106). The print style update judgment unit 921 of the STB 902 unpackages the print content in the storage unit 209, obtains the print data and the print control information (S107), and extracts the print style sheet and the print conditions from the print control information (S1003). Further, the STB 902 compares the specification information of the printing apparatus 903 connected to the STB 902 with the print conditions extracted in the step S1003 (S1004), and, in the case where the available font, the available paper, and the printable range shown in the specification information of the printing apparatus 903 satisfy the available font information shown by the print conditions and the respective conditions of the corresponding paper size and the printable range, it sends not only the notification of "update unnecessary" that is the judgment result of the update of the print style sheet to the print style sheet update unit 922 but also the corresponding print data and the print style sheet to the printing apparatus 903 via the print data output unit 204 and the communication unit 202 (S1006).

Here, the judgment processing for updating the print style sheet in the step S1004 is explained in detail with reference to the example shown in FIG. 4, the print style update judgment unit 921 of STB 902 identifies that the printing apparatus 903 does not handle "MSP Gothic" that is the font type shown by the print conditions but handles font sizes smaller than 10.5 point and "A4" paper based on the extracted print conditions and the specification information of the printing apparatus 903 stored in the storage unit 209, the print conditions being: ( i ) the available font information indicating that the font type is MSP Gothic and the font size is 10.5 point, ( ii ) the available paper size specifying A4, and ( iii ) the printable range indicating "not specified". As a result of this, the print style update judgment unit 921 judges that the print style sheet needs to be updated. In the case where the specifications of the printing apparatus 903 do not satisfy all the conditions in the print conditions in the step S1004, the print style update judgment unit 921 sends the notification of "update" as a result of the print style sheet to the print style sheet update unit 922.

The print style sheet update unit 922 receives the notification of "update" as a judgment result sent in the step S1004, and, as the judgment result is "update", changes the changeable parameters of the received print style sheet in a way that the printing is performed in a style that approximately matches the style shown by the received print style sheet (the uniqueness is guaranteed) based on the specification information of the printing apparatus 903 (S1005). The print style sheet update unit 922 sends the print data and the print style sheet changed in the step S1005 to the printing apparatus 903 via the print data output unit 204 and the communication unit 202 (S1006).

The printing apparatus 903 receives the print data and the print style sheet sent in the step S1006 (S1007) and prints the print data based on the received print style sheet (S1008).

As mentioned above, with the content presentation system 900 of the second embodiment, the STB 902 performs processing up to the update processing of the print style sheet based on the judgment processing for the update of the print style and the judgment, which makes it possible to always obtain the print result that approximately matches the print style sheet by only printing the print data received from the STB 902 according to the print style sheet attached to the print data. Therefore, this effect of the present invention can be enjoyed in the case where the printing apparatus 903 is a conventional printing apparatus on condition that it has a function for printing the print data according to the print style sheet.

Also, in the case of making a judgment based on the printing apparatus information like the print style update judgment unit 203 of the first embodiment, in the case where the number of printing apparatuses like this are many, there may be a case where all of these printing apparatuses that can execute printing the print style sheet cannot be described in the printing apparatus information. Therefore, even in the case of a printing apparatus that can execute printing the print style sheet as it is, the printing apparatus may have to be taken the processing of the print style sheet update unit. In contrast, with the print style update judgment unit 921 of the second embodiment, as the necessity of updating the print style sheet is judged based on the print conditions included in the print control information, the workload of the judgment processing becomes bigger than the one in the case of the judgment based on the printing apparatus information, but the necessity of the update can be judged more precisely and thus it becomes possible to reduce the workload of the print style sheet update unit.

Also, the content generation apparatus 901 of the second embodiment can be set in the ISP5, but there is no limit on this, it may be set in the broadcasting station 4. In contrast, the content generation apparatus 1 of the first embodiment may be set in the ISP5.

### (Third Embodiment)

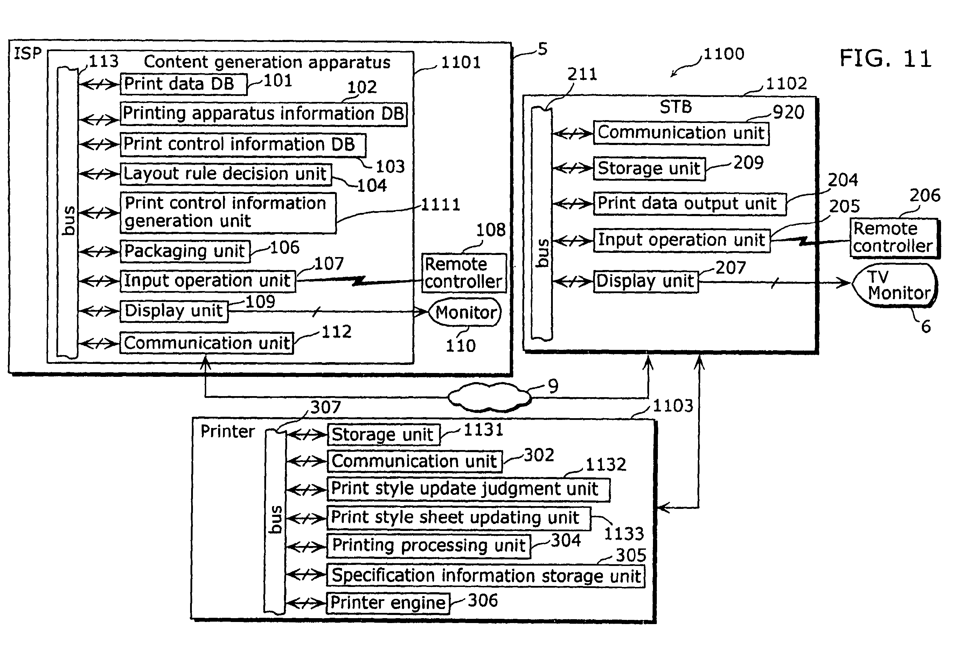

FIG. 11 is a block diagram showing the structure of the content presentation system 1100 of the third embodiment. Note that, the units mentioned earlier have already been explained, the same reference numbers are assigned to them and explanations on them will be omitted. Also, as the method for obtaining the display result of the display content for which the initial display style is mostly guaranteed in this embodiment is similar to the one in the case of the print content, only the case of print content will be explained.

The content presentation system 1100 is the content presentation system for printing the print data according to the updated print style sheet by not only judging whether the print style sheet need to be updated or not based on the print conditions in the print contents received by the printing apparatus and the specification information of the printing apparatus but also updates the print style sheet according to the judgment result, and includes the ISP5, the STB 1102, the printing apparatus 1103 and the communication network 9. The ISP5 is the server for delivering the print content generated by the content generation apparatus 1101 to the STB 1102 connected to the communication network 9 via the Internet, and includes a content generation apparatus 1101 inside.

The content generation apparatus 1101 is a content generation apparatus for generating the print content whose print control information includes the descriptions of the detailed print conditions, including a print data DB 101, a printing apparatus information DB 102, a print control information DB 103, a layout rule decision unit 104, a packaging unit 106, an input operation unit 107, a display unit 109, a communication unit 112 and a print control information generation unit 1111, and also includes a remote controller 108 and a monitor 110 as external apparatuses. The print control information generation unit 1111 generates print control information where printing conditions indicated as available font information, available paper sizes and printable range are synthesized with the print style sheet like in the case of the print control information generation unit 911 of the second embodiment, but it differs in that more detailed descriptions are listed as the print conditions for it.

For example, in the example of FIG. 4, the print control information generation unit 911 of the content generation apparatus 901 describes the available font information indicating that ( i ) the font type used for the print style sheet is MSP Gothic and ( ii ) the font size is 10.5 point, but the print control information generation unit 1111 of the third embodiment, in the case where the font type used for the print style sheet is MSP Gothic, lists up not only the MSP Gothic but also all the font types in the same font that can be used in printing without updating the style sheet, that is, all the font types whose character sizes are not bigger than the size of the MSP Gothic in the case of the same font sizes, such as "HGP Gothic E", "MSUI Gothic", "HGP Soei Kaku Gothic", "P Soei Kaku Gothic UB" and the like. Also, as it is possible to perform printing using paper which is bigger than "B5" without updating the print style sheet in the case where the paper size used for the print style sheet as the available paper size is "B5", for example, "B5", "A4", "B4" and the like will be listed up.

The STB 1102 is the STB that outputs the print content received from the ISP5 to the printing apparatus 1103 as it is, includes a communication unit 920, a print data output unit 204, an input operation unit 205 and a display unit 207, and also includes a TV monitor 6 and a remote controller 206 as external apparatuses.

The printing apparatus 1103 is the printing apparatus for printing the print data according to the print style sheet by receiving the print content from the STB 1102, judging the necessity of the update of the print style sheet based on the print conditions included in the print content and the specification information stored inside and updates the print style sheet according to the judgment result. It includes a communication unit 302, a printing processing unit 304, a specification information storage unit 305, a printing apparatus engine 306, a storage unit 1131, a print style update judgment unit 1132 and a print style sheet update unit 1133. The storage unit 1131 is a memory that is realized in a form of a RAM, a flash memory, an IC card, a hard disc and the like, and provides a storage area where the print content received by the communication unit 302 is temporally stored. The print style update judgment unit 1132 checks whether the specifications of the print output by the printing apparatus 1103 satisfies the print conditions extracted from the print control information or not based on the specification information stored in the specification information storage unit 305.

The specification information includes the character sizes corresponding to the respective font sizes of the respective fonts that can be handled by the printing apparatus 1103, and the print style update judgment unit 1132 judges that the condition on the font types is satisfied in the case where the printing apparatus 1103 handles one of the fonts listed up in the print conditions. As to the font sizes of the available font information, it makes a judgment similar to the case of the print style update judgment unit 921 of the second embodiment. Further, as to the available paper size, in the case where it handles one of the paper sizes listed up in the print conditions, it makes a judgment similar to the case of the print style update judgment unit 921.

As a check result obtained in this way, it judges that the print style sheet needs to be updated in the case where the print specification of the printing apparatus 1103 does not satisfy all the print conditions, while it judges that the print style sheet does not need to be updated in the case where the print specification of the printing apparatus 1103 satisfy all the print conditions. The print style sheet update unit 1133 differs from the print style sheet update unit 922 of the second embodiment in that it is in the printing apparatus 1103, but it updates a print style sheet in a similar way performed by the print style sheet update unit 303 of the first embodiment and the print style sheet update unit 922 of the second embodiment.

The operations of the content presentation system 1100 structured in the above-mentioned way will be explained below.

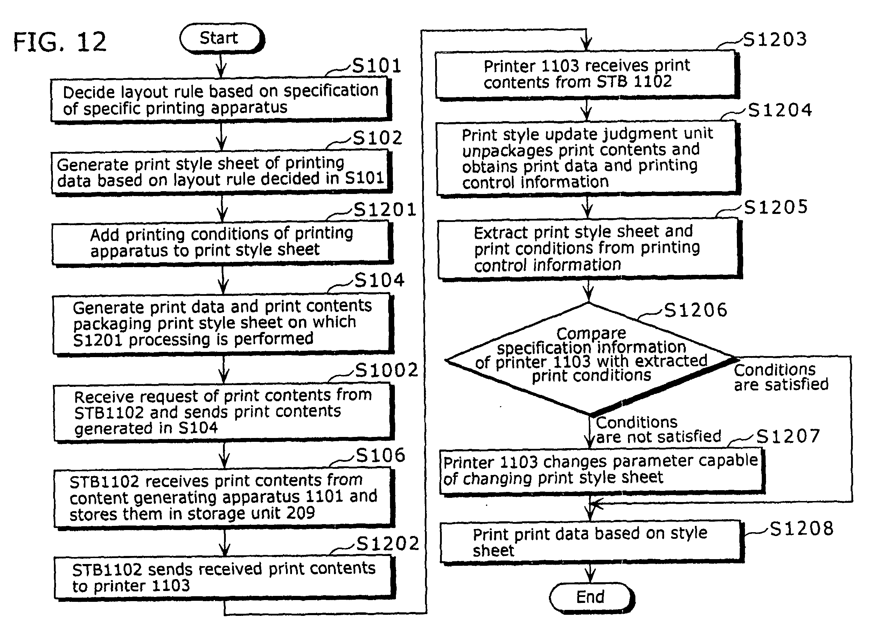

FIG. 12 is a flow chart showing the operation of the whole content presentation system 1100 shown in FIG. 11. First, the decision of the layout rule made by the content generation apparatus 1101 in the ISP5 (S101) and the generation processing of the print style sheet (S102) are similar to the ones in the case of the content generation apparatus 1 and the content generation apparatus 901 of the first embodiment and the second embodiment. Next, the print control information generation unit 1111 generates the print control information where ( i ) the print style sheet generated in the step S102 and ( ii ) the print conditions where the available font information, the available paper sizes and the printable range are listed up are synthesized (S1201). Here, the generation processing of the print control information in the step S1201 is explained in detail with reference to an example of FIG. 4, the print control information generation unit 1111 of the content generation apparatus 1101 generates the print conditions indicating ( i ) as the available font information, the font type used for the print style sheet is "MSP Gothic", "HGP Gothic E", "MSUI Gothic", "HGP Soei Kaku Gothic", "P Soei Kaku Gothic UB" and the like, ( ii ) the font size indicating 10.5 point, ( iii ) the available paper sizes indicating A4 and B4 and ( iv ) the printable range "not specified", and generate the print control information by synthesizing these print conditions with the print style sheet.

The packaging unit 106 of the content generation apparatus 1101 generates the print content where the print style sheet on which the processing of the step S1201 is performed and the print data in the print data DB 101 are packaged (S104) and sends the print content generated in the step S104 to the STB 1102 in response to the print content delivery request from the STB 1102 (S1002). The communication unit 920 of the STB 1102 receives the print content from the content generation apparatus 1101 and stores it in the storage unit 209 (S106). The communication unit 920 of the STB 1102 sends the received print content to the printing apparatus 1103 (S1202).

The printing apparatus 1103 receives the print content sent in the step S1202 from the STB 1102 (S1203), and the print style update judgment unit 1132 unpackages the received print content and obtains the print data and the print control information (S1204). The print style update judgment unit 1132 extracts the print style sheet and the print conditions from the obtained print control information (S1205). Next, it compares the specification information stored in the specification information storage unit 305 with the print conditions extracted in the step S1205 (S1206), and in the case where the available fonts, the available paper and the printable range that are shown in the specification information of the printing apparatus 1103 satisfy the respective conditions of the available fonts, the available paper and the printable range that are shown as the print conditions, it sends the notification of "update unnecessary" as a judgment result of the update of the print style sheet to the print style sheet update unit 1133.

Here, the judgment processing of the update of the print style sheet in the step S1206 is explained in detail with reference to FIG. 4. The print style update judgment unit 1132 of the printing apparatus 1103 identifies that the printing apparatus 1103 does not handle any of the font types listed up in the print conditions such as "MSP Gothic", "HGP Gothic E", "MSUI Gothic", "HGP Soei Kaku Gothic", "P Soei Kaku Gothic UB" and the like, but it handles font sizes that are not more than 0.5 point, and A4 paper based on the extracted print conditions (including ( i ) the available font information indicating that the font type is "MSP Gothic", "HGP Gothic E", "MSUI Gothic", "HGP Soei Kaku Gothic", "P Soei Kaku Gothic UB" and the like, ( ii ) the font size indicating 10.5 point, ( iii ) the available paper sizes indicating A4 and B4 and (iv) the printable range indicating "not specified") and the specification information stored in the storage unit 1131. As a result of this, the print style update judgment unit 1132 judges that the update of the print style sheet is necessary. In the case where the specification of the printing apparatus 1103 does not satisfy all the print conditions in the step S1206, the print style update judgment unit 1132 sends the notification of "update" as a result of the print style sheet to the print style sheet update unit 1133.

The print style sheet update unit 1133 receives the notification of "update" as the judgment result sent in the step S1206 and, as the judgment result is "update", changes the changeable parameters of the received print style sheet based on the specification information of the printing apparatus 1103 in a way that it approximately matches the received print style, (which means the uniqueness is guaranteed)(S1207). The print style sheet update unit 1133 sends the print data and the print style sheet changed in the step S1207 to the printing processing unit 304. The printing processing unit 304 rasterizes the print data based on the received print style sheet, sends the rasterized print data to the printing apparatus engine 306 and prints the print data in a print style that approximately matches the print style sheet (which means the uniqueness is guaranteed)(S1208).

In this way, with the content presentation system 1100 of the third embodiment, it judges the necessity of the update of the print style sheet in the printing apparatus 1103 and updates the print style sheet according to the judgment result, which brings an effect that the print result whose initial print style is approximately guaranteed in the printing apparatus 1103 can be obtained even in the case where the STB 1102 of the content presentation system 1100 is the conventional STB on condition that the STB 1102 has a function for outputting the received print content to the printing apparatus 1103.

Also, with the content presentation system 1100 of the third embodiment, as the print control information generation unit 1111 lists up respective items of the print conditions that can be substituted in order to approximately guarantee the initial print style even in the case where the print data is printed according to the print style sheet which is packaged along with the print data, the STB 1102 and the printing apparatus 1103 should store only the information concerning the print specifications that can be handled by the printing apparatus 1103, for example, there is an effect that it does not have to store the printing character sizes of the fonts that cannot be handled by the printing apparatus 1103.

Note that an explanation is made assuming that the content generation apparatus 1101 of the third embodiment is set in the ISP5, but this is not limited to the ISP5, it may be set in the broadcasting station 4.

### (Fourth Embodiment)

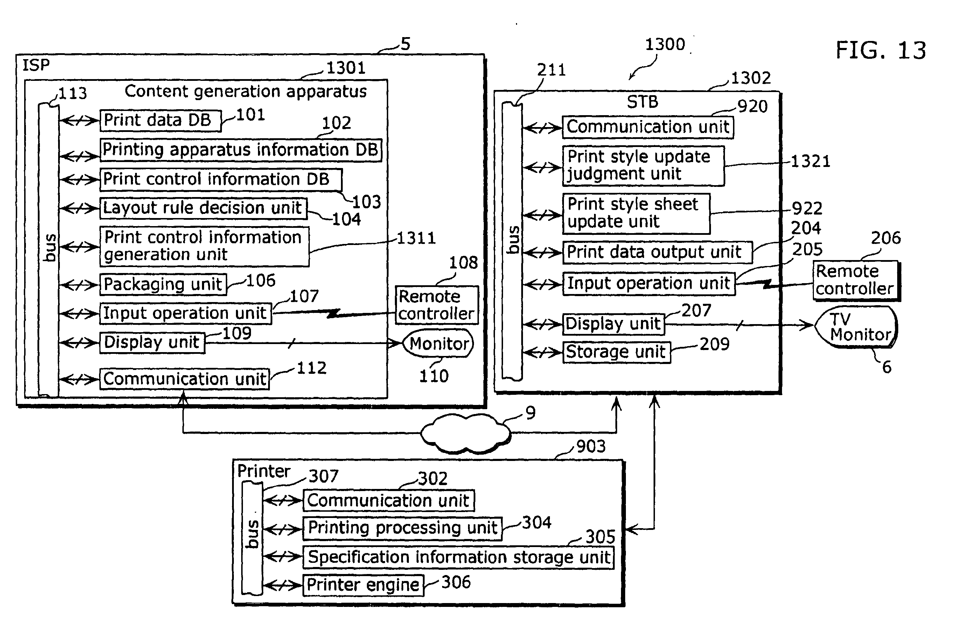

FIG. 13 is a block diagram showing the structure of the content presentation system 1300 of the fourth embodiment. Note that, as units mentioned earlier have already been explained, the same reference numbers are assigned to them and these explanations will be omitted. Also, in the embodiment, the method for obtaining the display result of the display content whose initial display style is approximately guaranteed is similar to the one in the case of the print content, and only the case of printing will be explained.

The content presentation system 1300 is the content presentation system for receiving the print instruction along with displaying the print data of the print content received from the STB on a TV monitor, starting the judgment on the necessity of the update of the print style sheet according to the print instruction from the user, and updating up to the update of the print style sheet according to the judgment result, and includes an ISP5, an STB 1302, a printing apparatus 903 and a communication network 9. The ISP5 is the server for delivering the print content and the like to be generated by the content generation apparatus 1301 in the STB 1302 connected to the communication network 9 via the Internet and includes a content generation apparatus 1301 inside.

The content generation apparatus 1301 is the content generation apparatus that generates the print content including the print execution command and the association information indicating the relation between the print execution command and the print style sheet, includes a print data DB 101, a printing apparatus information DB 102, a print control information DB 103, a layout rule decision unit 104, a packaging unit 106, an input operation unit 107, a display unit 109, a communication unit 112 and a print control information generation unit 1311, and includes a remote controller 108 and a monitor 110 as external apparatuses. The print control information generation unit 1311 generates the print control information 310 in a way similar to the case of the print control information generation unit 911 of the second embodiment, but it differs from the print control information generation unit 911 in that it further generates the print execution command to the STB 1302 and the association information indicating the association between the print execution command and the print style sheet and generates the print control information 310 including the print execution command and the association information.

The STB 1302 judges the necessity of the update of the print style sheet in a way similar to the case of the STB 902 of the second embodiment, and includes a function for updating the print style sheet according to the judgment result. It differs from the STB 902 in that it displays the print data in the print content received from the ISP5 on a TV monitor and it receives the print instruction from the user to the displayed print data, includes a print data output unit 204, an input operation unit 205, a display unit 207, a storage unit 209, a communication unit 920, a print style sheet update unit 922 and a print style update judgment unit 1321, and includes a TV monitor 6 and a remote controller 206 as external apparatuses. The print style update judgment unit 1321 displays the print data on a TV monitor 6 by outputting the print data included in the print content on the display unit 207, and receives the print instruction to the input operation unit 205 by a user's operation of the remote controller 206. In the case where the input to the input operation unit 205 is the instruction of the print execution, it judges the necessity of the update of the print style sheet in a way similar to the case of the print style update judgment unit 921 of the second embodiment by executing the print execution command associated with the print style sheet. In the case where the input to the input operation unit 205 is an instruction indicating that the printing is not executed, the processing concerning the print content is finished.

The printing apparatus 903 is the printing apparatus that prints the print data in the print content received from the STB 1302 according to the print style sheet in the print content as it is, and includes a communication unit 302, a printing processing unit 304, a specification information storage unit 305 and a printing apparatus engine 306.

The operation of the content presentation system 1300 structured in the above-mentioned way will be explained below.

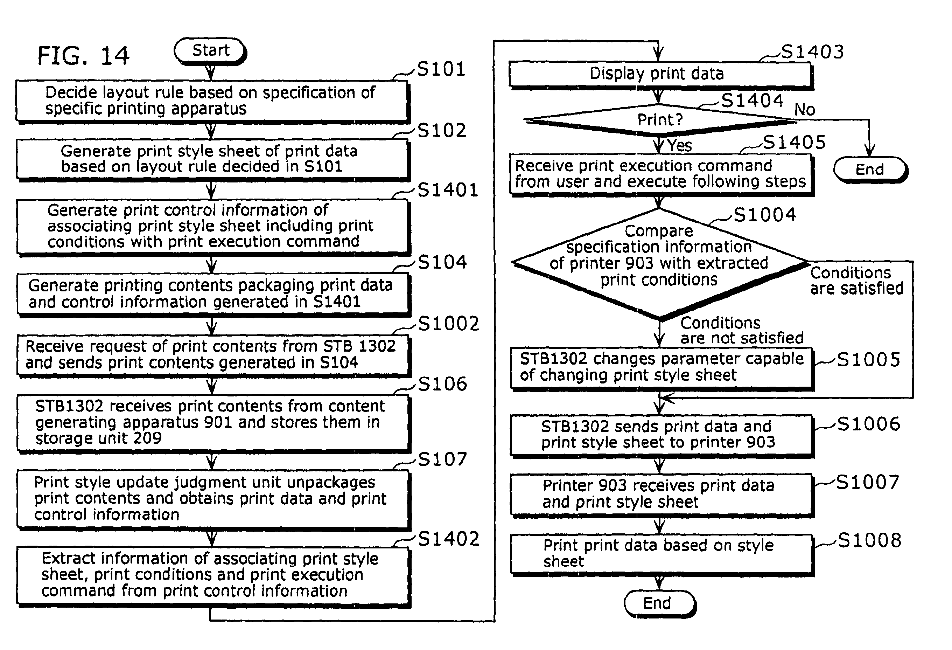

FIG. 14 is a flow chart showing the operation of the whole content presentation system 1300 shown in FIG. 13. First, the decision of the layout rule made by the content generation apparatus 1301 in the ISP5 (S101) and the generation processing of the print style sheet (S102) are similar to the ones in the case of the content generation apparatus 1 of the first embodiment. Next, the print control information generation unit 1311 associates the print execution command to the STB 1302 with the print style sheet and generates the association information indicating the association. Further, it generates the print control information where the print execution command, the generated association information, the print style sheet generated in the step S102 are synthesized with print conditions (S1401).

The packaging unit 106 of the content generation apparatus 1301 generates the print content where the print control information generated in the step S1401 and the print data in the print data DB 101 are packaged (S104), and sends the print content generated in the step S104 to the STB 1302 via the communication unit 112 and the communication network 9 in response to the print content delivery request from the STB 1302 (S1002).

The communication unit 920 of the STB 1302 receives the print content from the content generation apparatus 1301 and stores it in the storage unit 209 (S106). The print style update judgment unit 1321 of the STB 1302 unpackages the print content in the storage unit 209, obtains the print data and the print control information (S107) and extracts the print style sheet, the print conditions, the print execution command and the association information from the print control information (S1402). The print style update judgment unit 1321 displays the print data on a TV monitor 6 by outputting the extracted print data on the printing unit 207 and displays a guiding sentence for guiding the print instruction to the user such as "Print print content?" (S1403). The print style update judgment unit 1321 receives the print instruction by the user's operation of the remote controller 206 (S1404), executes the print execution command in response to the instruction indicating the print execution to the input operation unit 205 (S1405), compares the specification information of the printing apparatus 903 connected to the STB 1302 to the print conditions extracted in the step S1402 (S1004) in a way similar to the case of the print style update judgment unit 921 of the second embodiment, and judges the necessity of the update of the print style sheet. In the step S1404, in the case where the instruction indicating that the printing is not executed is inputted, the processing concerning the print content is finished.

The following processing is similar to the processing in the step S1005 to the S1008 of the flow chart shown in FIG. 10.

As mentioned up to this point, with the content presentation system 1300 of the fourth embodiment, packaging the print execution command and the association information in the print content produces an effect that it is possible to print the received print content according to the user's print instruction and obtain the print result whose initial print style is approximately guaranteed.

Note that, in the content presentation system 1300 of the fourth embodiment, the explanation is made assuming that the content generation apparatus 1301 is set at the ISP5, but the content presentation system of this invention is not limited to this, and it may be set in the broadcasting station 4.

Also, in the content presentation system 1300 of the fourth embodiment, the print execution command and the association information are synthesized in the print style sheet of the second embodiment, but the print execution command may be included in the print content, not in the print control information. Also, the print execution command and the association information of the fourth embodiments may be included in the print control information of the first embodiment. In this way, it is possible to make the necessity judgment on the update of the print style sheet according to the print instruction from the user after temporally displaying the print data on a TV monitor.

### (Fifth Embodiment)

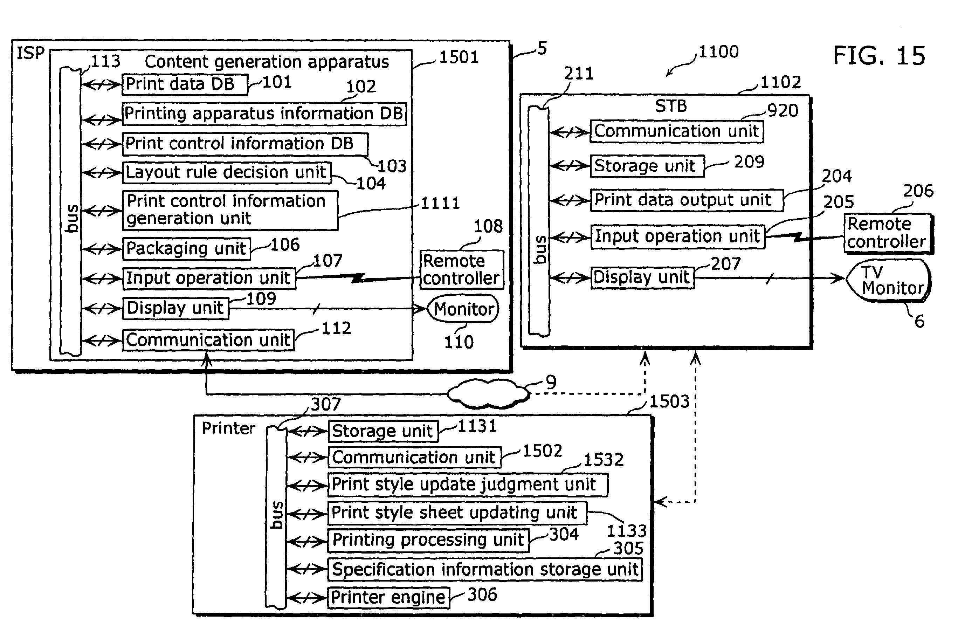

FIG. 15 is a block diagram showing the structure of the content presentation system 1500 of the fifth embodiment. Note that, as the units mentioned earlier have already been explained, the same reference numbers are assigned to them and the explanations on them will be omitted. Also, in this embodiment, the method for obtaining the display result of the display content whose initial display style is approximately guaranteed is similar to the one in the case of print content, only the case of printing will be explained.

The content presentation system 1500 is the content presentation system where the printing apparatus directly receives the print content from the content generation apparatus in the ISP, judges the necessity of the update of the print style sheet, and updates the print style sheet according to the judgment result, and includes an ISP5, as STB 1102, a printing apparatus 1503, and a communication network 9. The ISP5 is the server that periodically delivers the print content and the like to be generated by the content generation apparatus 1501 and includes a content generation apparatus 1501 inside.

The content generation apparatus 1501 is the content generation apparatus that directly sends the generated print content to the printing apparatus 1503 connected to the communication network 9, includes a print data DB 101, a printing apparatus information DB 102, a print control information DB 103, a layout rule decision unit 104, a packaging unit 106, an input operation unit 107, a display unit 109, a communication unit 1512 and a print control information generation unit 1111, and includes a remote controller 108 and a monitor 110 as external apparatuses. The communication unit 1512 periodically delivers the print content generated by the content generation apparatus 1501 to the printing apparatus 1503 connected to the communication network 9.

The STB 1102 is the STB similar to the one in the second embodiment and includes a communication unit 920, a print data output unit 204, an input operation unit 205 and a display unit 207, and includes a TV monitor 6 and a remote controller 206 as external apparatuses.

The printing apparatus 1503 is the printing apparatus that directly receives the print content from the content generation apparatus 1501, judges the necessity of the update of the print style sheet and prints the print data by updating the print style sheet according to the judgment result, and includes a printing processing unit 304, a specification information storage unit 305, a printing apparatus engine 306, a storage unit 1131, a print style sheet update unit 1133, a communication unit 1502, and a print style update judgment unit 1132.

The communication unit 1502 includes not only a parallel I/F, a USB or an interface for the IEEE 1394 bus and the like that are for connecting the STB 1102 with the printing apparatus 1503 but also a modem and the like for connecting the printing apparatus 1503 with a communication network 9 such as the Internet, and also includes a function for communicating data between the printing apparatus 1503 and external apparatuses. In this way, the communication unit 1502 periodically receives the print content directly from the content generation apparatus 1501, and stores the received print content in the storage unit 1131.

In this way, with this fifth embodiment, further adding the communication function via the communication network 9 such as the Internet to the printing apparatus having the function similar to the one in the case of the printing apparatus 1103 of the third embodiment eliminates the necessity of receiving the print content via the STB 1102 and makes it possible to reduce the workload of the STB 1102 concerning the print content, and which produces an effect that it becomes possible to increase the processing concerning the display.

Note that, the above-mentioned fifth embodiment explains that the content generation apparatus 1501 one-sidedly sends the print content to the printing apparatus 1503, but this invention is not limited to this, for example, the printing apparatus 1503 may send the specification information concerning the print output of the printing apparatus 1503 to the content generation apparatus 1501 so as to request the delivery of the print content. In this case, in response to this, the print control information generation unit of the content generation apparatus 1501 generates the print style sheet of the print data based on the received specification information and sends the print content made of the generated print style sheet and the print data to the printing apparatus 1503 that is the source of the request. Doing in this way brings an effect that the printing apparatus 1503 as the source of the request can obtain the optimum print result of the print data without being required to judge the necessity of the update of the print style sheet or being required to update the print style sheet even in the case of receiving the print content via the STB 1102 or in the case of directly receiving the content generation apparatus 1501. Therefore, this produces an effect of eliminating the necessity that the STB has a printing apparatus driver and performs the processing respective for the printing apparatuses connected to the STB, and thus all the STB have to do is output the received print content to the printing apparatus.

Note that the above-mentioned embodiment 1 to 5 explained that the printing apparatus prints the print data according to the updated print style sheet after updating the print style sheet, but the present invention is not limited to this, the following processing may further be performed after updating the print style sheet. In other words, it is possible to send the after-change print style sheet to the STB in the case where the print style sheet update unit is set at the printing apparatus send the after-change print style sheet to the display unit in the case where the print style sheet update unit is set at the STB, and display as a preview the print data on a TV monitor based on the after-update print style sheet. Further, it is possible to start printing the print data according to the print instruction from a user to the preview display of the TV monitor. Doing this enables a user to confirm the print style after updating the print style sheet, and thus the user cancels the printing in the case where the desired print result cannot be obtained in the after-update print style, or the user repeats the processing until the user obtains the desired print style by instructing the update of the print style again. Therefore, there is an effect that it is possible to avoid wasting the resource from unnecessary print output. Also, the print style sheet update unit may display the display screen for inquiring the user of the necessity of the preview and display as a preview according to the preview execution instruction to this. Doing this produces an effect that the user does not have to perform the unnecessary processing, that is, unnecessary processing in the STB and the printing apparatus can be avoided.

Note that, in the above-mentioned embodiment 1 to 5, each print style update judgment unit judges the necessity of the update of the print style sheet based on only the printing apparatus information or only the print conditions, but the present invention is not limited to this, it is possible to judge the necessity of the update of the print style sheet based on the printing apparatus information and the print conditions. Also, the print conditions combined with the printing apparatus information may be the print conditions shown in the second embodiment or the print conditions shown in the third embodiment. In this way, making a judgment based on the combination of the printing apparatus information and the print conditions lengthen the time needed for the judgment, but more accurate judgment can be done. In this case, it becomes possible to reduce the time needed for the judgment processing by outputting the notification of "update unnecessary" after immediately finishing the judgment on the necessity of the update in the case where the printing apparatus or its model that corresponds to a printing apparatus in the printing apparatus information is detected or by outputting the notification of "update" after immediately finishing the judgment on the necessity of the update in the case where merely a print condition is not satisfied. It is also possible to make a more accurate judgment by further making a judgment based on the print conditions in the case of judging whether the printing apparatus is the printing apparatus shown by the printing apparatus information or its model based on the printing apparatus information and it is not the one.

Note that, in the above-mentioned 1 to 5 embodiments, a single common print style sheet is generated for the plurality of printing apparatuses or the model of the printing apparatuses that are conceived at the content generation apparatus side, but it is not necessarily one, it is also possible to generate some different print style sheets that respectively correspond to some groups of the plurality of printing apparatuses or the models of printing apparatuses. In this case, there is a need to attach the printing apparatus information for identifying the corresponding plurality of printing apparatuses or the models of printing apparatuses to each of print style sheets. Attaching a print style sheet to each of the plurality of printing apparatuses or the models of printing apparatuses that are conceived at the content generation apparatus side in this way produces an effect that it is possible to print the print data in a good-looking way using the optimum print style for the printing apparatus in each of the conceived printing apparatuses. Also, as it is possible to update the print style sheet selecting the print style sheet with the least difference in the layout rule or in the parameters that badly affect the layout as the print result even in the case of updating the print style sheet, it is possible to print the print data in a more good-looking way.

Note that, the embodiment 1 to 5 explains that the judgment result indicating that the print style sheet needs to be updated is sent to the print style sheet update unit in the case where the printing apparatus is not the one of the plurality of printing apparatus types, models, model numbers and the like that are described in the printing apparatus information, or the specification of the printing apparatus does not satisfy all of the print conditions, but the present invention is not limited to this. For example, it is also possible to finish the processing only by sending the notification of "printing NG" to the STB and simply displaying the notification on a TV monitor in the case where the print style update judgment unit is set in the printing apparatus. Note that no print style sheet update unit is necessary in this case. Further, the STB may send the notification of "printing NG" to the content generation apparatus in the case where the content generation apparatus and the STB can communicate with each other. Together, it is also possible to send the maker code, the printing apparatus code, the model code, the model number of the printing apparatus. This enables the content generation apparatus such as the broadcasting station and the ISP to obtain the information on the printing apparatus connected to the STB, and storing the printing apparatus information like this produces an effect of enabling reflecting these pieces of information on the print contents to be generated.

Note that, in the above-mentioned embodiment 1 to 5, each of the print style update judgment units notifies the print style sheet update unit of the necessity of the update of the print style sheet as a judgment result, but the present invention is not limited to this, and it is also possible to notify the unit of the parameters to be updated or the parameters whose print conditions are not satisfied along with the necessity of the update of the print style sheet in the case of making a judgment based on the print condition. Doing this brings an effect that it becomes possible to omit a part of the update processing of the print style sheet update unit and reduce the processing workload of the print style sheet update unit. Also, the above-mentioned embodiments 2 and 3 explain that the print conditions mean available font information (font types and sizes), available paper sizes and printable ranges (such as "front page" and "5mm margins are required on all sides of paper"), but the present invention is not limited to this, they may be other parameters.

Note that the content generation apparatus in the content presentation system generates the print contents by packaging the print data and the print control information in the above-mentioned embodiments 1 to 5, but the present invention is not limited to this. For example, the content generation apparatus may store the print control information in the server on the Internet, and package, in the print content instead of the print control information, the information indicating the association between the print data and the print control information (such as the URL indicating the storage location of the print control information) and the print execution command. In this case, the STB that received this print content not only receives the user input as a print instruction but also displays the print data on a TV monitor. In response to the input that indicates executing printing, the print style update judgment unit obtains the print control information via the Internet according to the information indicating the association, and judges the necessity of updating the print style sheet. In this way, as excluding the print control information from the print contents makes it possible to reduce the data amount of the print contents, the transmission time of the print contents is reduced, and there is an effect that the user of the printing apparatus can immediately obtain the print content from the content generation apparatus side such as the broadcasting station and the ISP, obtain the print control information from a server on the Internet at the time of printing the print content according to the print instruction from the user, prints the print data based on the obtained print control information and obtain the print result that approximately matches the print style expected by the content generation side (that is, the uniqueness is guaranteed).

Also, in the above-mentioned embodiments, the model compatibility judgment for judging whether the model of the printing (displaying) apparatus connected to the receiver is the model shown by the above-mentioned printing (displaying) apparatus information or not is explained based on the printing (displaying) apparatus information in the print (display) content. However, it is preferable that this model compatibility judgment should be done at least one time after a presentation apparatus such as a printing apparatus and a displaying apparatus is connected to the receiver. Also, it is possible to make this model compatibility judgment at the time of presenting the contents including the presentation specifications or the presentation apparatus information for the first time after connecting the receiver with the presentation apparatus, not at the timing of connecting the presentation apparatus to the receiver. Making the model compatibility judgment at this timing enables obtaining the presentation result that approximately matches the presentation style expected at the presentation apparatus side, that is, the uniqueness is guaranteed, without making no model compatibility judgment from the time point as long as the presentation apparatus is connected to the receiving apparatus.

### Industrial Applicability

The presentation system concerning the present invention is useful as not only the broadcasting system, but also as a presentation system for receiving the video from the video delivery system and the like by the Internet or the CATV and the like via the public net or the communication cable, prints and displays the video. Also, the receiving apparatus, the mobile phone, the personal computer and the like concerning the present invention are useful as the apparatus that receives the video from the video delivery system by the Internet via the public net and the CATV via the communication cable, outputs the print data and displays the display data. Further, the printing apparatus concerning the present invention is useful as the printing apparatus that prints the video received from the broadcasting system, the video delivery system and the like using the Internet via the public net and the CATV via the communication cable.

## Claims

1. A content generation apparatus comprising:
a presentation control information generation unit operable to generate presentation control information that includes a style sheet describing presentation settings in the case where presentation data is presented based on a presentation specification that is previously defined in order to guarantee uniqueness concerning a page layout of the presentation data; and
a content generation unit operable to associate each of the presentation data with the presentation control information and generate a content including information indicating the association and the presentation data.

2. The content generation apparatus according to Claim 1,
wherein the presentation control information includes presentation specification information concerning the presentation specification.

3. The content generation apparatus according to Claim 2,
wherein the presentation specification information includes presentation apparatus information specifying one of ( i ) at least one presentation apparatus that is a display apparatus or a printing apparatus and ( ii ) a model of the presentation apparatus.

4. The content generation apparatus according to Claim 3,
wherein the presentation apparatus information includes a page margin indicating a presentation range of the presentation apparatus as a presentation specification of the presentation apparatus.

5. A receiving apparatus comprising:
a content receiving unit operable to receive a content including ( i ) presentation data and ( ii ) presentation control information, which is associated with the presentation data, which includes a style sheet describing presentation settings in the case where the presentation data is presented based on a presentation specification that is previously defined in order to guarantee uniqueness concerning a page layout of the presentation data;
a presentation control information extraction unit operable to extract the presentation control information from the received content;
a presentation apparatus specification information obtainment unit operable to obtain, from a presentation apparatus connected to the receiving apparatus, presentation apparatus specification information concerning a specification of a presentation output of the presentation apparatus; and
an update judgment unit operable to compare the presentation control information with the obtained presentation apparatus specification information and judge whether the style sheet should be updated or not.

6. The receiving apparatus according to Claim 5,
wherein the presentation control information includes presentation specification information concerning the presentation specification, and
the update judgment unit compares the presentation specification information included in the presentation control information with the obtained presentation apparatus specification information and judges whether the style sheet should be updated or not.

7. The receiving apparatus according to Claim 6,
wherein the presentation apparatus specification information includes a page margin indicating a presentation range of the presentation apparatus as a specification of a presentation output of the presentation apparatus.

8. The receiving apparatus according to Claim 6,
wherein the presentation specification information includes presentation apparatus information specifying one of ( i ) at least one presentation apparatus that is a display apparatus or a printing apparatus and ( ii ) a model of the presentation apparatus, and
the update judgment unit compares the presentation apparatus information included in the presentation control information with the obtained presentation apparatus specification information and judges whether the style sheet should be updated or not.

9. A receiving apparatus comprising:
a content receiving unit operable to receive a content including ( i ) presentation data and ( ii ) presentation control information, which is associated with the presentation data, which includes (a) presentation specification information concerning a presentation specification that is previously defined in order to guarantee uniqueness concerning a page layout of the presentation data and (b) a style sheet describing presentation settings in the case where the presentation data is presented based on the presentation specification;
a presentation control information extraction unit operable to extract the presentation control information from the received content; and
an output unit operable to output the presentation data based on the presentation specification and the style sheet that are included in the presentation control information.

10. A presentation apparatus comprising:
a content obtainment unit operable to obtain, from a connected receiving apparatus, a content that includes ( i ) presentation data and ( ii ) presentation control information which is associated with the presentation data that includes (a) presentation specification information concerning a presentation specification that is previously defined in order to guarantee uniqueness concerning a page layout of the presentation data and (b) a style sheet describing presentation settings in the case where the presentation apparatus presents the presentation data of the content;
a presentation control information extraction unit operable to extract the presentation control information from the obtained content;
an update judgment unit operable to compare the presentation specification information included in the presentation control information with presentation apparatus specification information concerning a specification of self presentation output and judge whether the style sheet should be updated or not;
a layout rule extraction unit operable to extract a layout rule indicating a selection range of parameters of the presentation settings from the presentation apparatus specification information in the case of updating the style sheet as a result of the judgment;
a style sheet update unit operable to change the parameters of the style sheet with reference to the extracted layout rule and the style sheet; and
a presentation unit operable to present the presentation data based on the updated style sheet.

11. The presentation apparatus according to Claim 10,
wherein the presentation specification information includes presentation apparatus information specifying one of ( i ) at least one presentation apparatus that is a display apparatus or a printing apparatus and ( ii ) a model of the presentation apparatus, and
the update judgment unit compares presentation apparatus information included in the presentation control information with the presentation apparatus specification information and judge whether the style sheet should be updated or not.

12. A content generation apparatus comprising:
a print control information generation unit operable to generate print control information including ( i ) print specification information concerning print specification that is previously defined in order to guarantee uniqueness concerning a page layout of print data and ( ii ) a print style sheet describing print settings of the print data; and
a content generation unit operable to associate each of the print data with the print control information and generate a print content including the print data and information indicating a resulting association.

13. The content generation apparatus according to Claim 12,
wherein the print specification information includes printing apparatus information specifying a printing apparatus.

14. The content generation apparatus according to Claim 13,
wherein the content generation unit further generates a print content including a print execution command for causing the printing apparatus to execute printing.

15. The content generation apparatus according to Claim 13, further comprising a layout rule decision unit operable to decide a layout rule indicating a selection range of parameters of print settings in the printing apparatus based on the printing apparatus information,
wherein the print control information generation unit generates the print style sheet of each of the print data based on the decided layout rule.

16. The content generation apparatus according to Claim 15,
wherein the parameters include a paper size, margin sizes, font types, character sizes, colors, widths of lines, the number of characters in a line, spaces between characters and ornamentation.

17. A content generation apparatus comprising:
a print control information generation unit operable to generate print control information including printing apparatus information specifying a printing apparatus and a print style sheet describing print settings of a text of electronic mail; and
a content generation unit operable to generate one of ( i ) an electronic mail including the text of the electronic mail and the print control information and ( ii ) an electronic mail including the text of the electronic mail and link information to the print control information.

18. The content generation apparatus according to Claim 17,
wherein the content generation unit incorporates the generated print control information into a header of the electronic mail.

19. A content generation apparatus comprising:
an apparatus information storage unit operable to store specification information concerning print output of one of ( i ) at least one printing apparatus and ( ii ) a model of the printing apparatus;
a layout rule decision unit operable to decide a layout rule indicating a selection range of specific parameters of print settings in one of the printing apparatus and the model based on the specification information;
a print control information generation unit operable to generate print control information including the decided layout rule and a print style sheet describing the print settings of print data; and
a content generation unit operable to associate the print data with the print control information and generate a print content including the print data and information indicating a resulting association.

20. A receiving apparatus comprising:
a content receiving unit operable to receive a print content that includes ( i ) print data and ( ii ) print control information, which is associated with the print data, which includes ( i ) print specification information concerning a print specification that is previously defined in order to guarantee uniqueness concerning a page layout of the print data and ( ii ) a print style sheet describing print settings of the print data in a printing apparatus;
a print control information extraction unit operable to extract the print control information from the print content;
a printing apparatus specification information receiving unit operable to receive, from the printing apparatus, printing apparatus specification information concerning print output of the printing apparatus; and
a comparison unit operable to compare the print specification information included in the print control information with the received printing apparatus specification information.

21. The receiving apparatus according to Claim 20,
wherein the print specification information includes printing apparatus information specifying one of ( i ) at least one printing apparatus and ( ii ) a model of at least one printing apparatus, and
the comparison unit compares the printing apparatus information included in the print control information with the received printing apparatus specification information.

22. The receiving apparatus according to Claim 21,
wherein the comparison unit compares ( i ) one of a printing apparatus and a model of the printing apparatus which is specified by the received printing apparatus specification information with ( ii ) one of a printing apparatus and a model of the printing apparatus which is specified by the printing apparatus information to check whether ( i ) is included as ( ii ), and
the receiving apparatus further includes an output unit operable to output the print data and the print style sheet to the printing apparatus in the case where one of a printing apparatus and the model of the printing apparatus that is specified by the prihnting apparatus information is included as a result of the comparison.

23. The receiving apparatus according to Claim 22, further comprising:
a layout rule extraction unit operable to extract a layout rule indicating a selection range of parameters of print settings in the printing apparatus from the received specification information in the case where neither a printing apparatus nor the model of the printing apparatus that is specified by the printing apparatus information is included as a result of the comparison; and
a print style sheet update unit operable to update the parameters of a print style sheet so as to perform print output according to the print style sheet with reference to the extracted layout rule and the print style sheet.

24. The receiving apparatus according to Claim 23,
wherein the print style sheet update unit updates the other parameters of a print style sheet so that the printing apparatus can execute printing output according to the number of characters in a line and the number of lines in a page that are the parameters of the print style sheet.

25. The receiving apparatus according to Claim 23,
wherein the content receiving unit receives a print content that includes a print execution command for ( i ) executing comparing the printing apparatus information with the specification information, ( ii ) updating a print style sheet and ( iii ) printing print data, and
the print style sheet update unit updates predetermined parameters to predetermined values in the print style sheet so that the printing apparatus can execute printing output according to the number of characters in a line and the number of lines in a page that are the parameters of the print style sheet in response to the print execution command.

26. The receiving apparatus according to Claim 25, further comprising:
a preview unit operable to have a display apparatus display a print display screen based on the print style sheet and receive a print instruction by an operator's operation; and
an output unit operable to output the print data and the print style sheet to the printing apparatus in response to the print instruction.

27. The receiving apparatus according to Claim 25, further comprising:
a print instruction input unit operable to receive a print instruction by an operator's operation; and
an output unit operable to output the print data and the print style sheet to the printing apparatus in response to the print instruction.

28. The receiving apparatus according to Claim 22,
wherein the content receiving unit receives the print content including a layout rule indicating a selection range of specific parameters of print settings decided based on information concerning print output of one of ( i ) the printing apparatuses and ( ii ) a model of the printing apparatus instead of the printing apparatus information,
the specification information receiving unit receives the specification information including the layout rule indicating the selection range of the parameters of the print settings of the printing apparatus from the printing apparatus,
the comparison unit compares the layout rule included in the print content with the layout rule included in the specification information, and
the receiving apparatus further comprises a print style sheet update unit operable to update the print style sheet in the case where the layout rule included in the specification information does not satisfy the layout rule included in the print content as a result of the comparison.

29. The receiving apparatus according to Claim 22, further comprising
a notification unit operable to notify a printing apparatus connected to the receiving apparatus of that the print style sheet needs to be updated in the case where neither a printing apparatus nor the model of the printing apparatus that is specified by the printing apparatus information is included as a result of the comparison.

30. A receiving apparatus comprising:
an electronic mail receiving unit operable to receive a text of an electronic mail and one of ( i ) electronic mail that includes (a) print control information associated with the text of the electronic mail including printing apparatus information specifying at least one printing apparatuses and (b) a print style sheet describing print settings of the text of the electronic mail in each of the printing apparatuses and ( ii ) electronic mail that includes (a) link information between the text of the electronic mail and (b) the print control information;
a print control information extraction unit operable to extract the print control information from the electronic mail;
a printing apparatus specification receiving unit operable to receive, from a printing apparatus, printing apparatus specification information concerning print output of the printing apparatus, the printing apparatus specification information including information specifying the printing apparatus;
a comparison unit operable to compare the printing apparatus information included in the print control information with the received printing apparatus specification information; and
an output unit operable to output the text of the electronic mail and the print style sheet to the printing apparatus in the case where printing apparatuses specified by the printing apparatus specification information are included in printing apparatuses specified by the printing apparatus information.

31. The receiving apparatus according to Claim 30, further comprising:
a layout rule extraction unit operable to extract a layout rule indicating a selection range of parameters of print settings in the printing apparatus from the received specification information in the case where the printing apparatuses specified by the printing apparatus specification information are not included in printing apparatuses specified by the printing apparatus information as a result of the comparison; and
a print style sheet update unit operable to update the parameters of a print style sheet so as to execute printing output according to the print style sheet with reference to the extracted layout rule and the print style sheet,
wherein the output unit outputs the text of the electronic mail and the updated print style sheet to the printing apparatus.

32. The receiving apparatus according to Claim 31,
wherein the electronic mail receiving unit receives an electronic mail including a print execution command for causing the printing apparatus to execute printing, and
the print style sheet update unit updates predetermined parameters of the print style sheet to predetermined values so that the printing apparatus execute printing output according to the number of characters in a line and the number of lines in a page that are the parameters in the print style sheet in response to the print execution command.

33. The receiving apparatus according to Claim 32, further comprising:
a preview unit operable to have a display apparatus display a print display screen of the text of the electronic mail based on the print style sheet and receive a print instruction by an operator's operation; and
an output unit operable to output the print data and the print style sheet to the printing apparatus in response to the print instruction.

34. A receiving apparatus comprising:
an electronic mail receiving unit operable to receive a text of an electronic mail and print control information, which is associated with the text of the electronic mail, which includes ( i ) printing apparatus information specifying at least one printing apparatus in a header of the electronic mail and ( ii ) a print style sheet describing print settings of the text of the electronic mail in each of the printing apparatus;
a print control information extraction unit operable to extract the print control information from the electronic mail;
a printing apparatus specification information receiving unit operable to receive, from a printing apparatus, printing apparatus specification information concerning a print output of the printing apparatus, the printing apparatus specification information including information specifying the printing apparatus;
a comparison unit operable to compare the printing apparatus information included in the print control information with the received printing apparatus specification information; and
an output unit operable to output the text of the electronic mail and the print style sheet to the printing apparatus in the case where printing apparatuses specified by the printing apparatus specification information are included as printing apparatus specified by the printing apparatus information.

35. A printing apparatus comprising:
a content receiving unit operable to receive, from a receiving apparatus, a print content that includes print data and print control information, which is associated with the print data, which includes ( i ) print specification information concerning a print specification that is previously defined in order to guarantee uniqueness concerning a page layout of print data and ( ii ) a print style sheet describing print settings of print data by the printing apparatus;
a print control information extraction unit operable to extract the print control information from the print content;
a printing apparatus specification information storage unit operable to hold printing apparatus specification information concerning a specification of self print output;
a comparison unit operable to compare the print specification information included in the print control information and the printing apparatus specification information;
a layout rule extraction unit operable to extract a layout rule indicating a selection range of parameters of print settings from information concerning a specification of self print output in the case where the specification of the print output specified by the printing apparatus specification information is not included in a print specification specified by the print specification information as a result of the comparison:
a print style sheet update unit operable to update the parameters of a print style sheet with reference to the extracted layout rule and the print style sheet; and
a printing unit operable to print print data based on the updated print style sheet.

36. The printing apparatus according to Claim 35,
wherein the print specification information includes printing apparatus information specifying one of ( i ) at least one printing apparatuses and ( ii ) a model of the printing apparatus,
the printing apparatus specification information includes information concerning a specification of print output including identification information specifying one of a self printing apparatus and a model of the printing apparatus,
the comparison unit compares the printing apparatus information included in the print control information with the identification information, and
the layout rule extraction unit extracts a layout rule indicating a selection range of parameters of print settings from information concerning the specification of the self print output in the case where ( i ) neither a printing apparatus nor a model of the printing apparatus specified by the printing apparatus specification information is included as ( ii ) one of a printing apparatus and a model of the printing apparatus specified by the printing apparatus information as a result of the comparison.

37. The printing apparatus according to Claim 36,
wherein the content receiving unit receives the print content including a layout rule indicating a selection range of specific parameters of print settings decided based on information concerning print output of one of ( i ) one or more of the printing apparatuses and ( ii ) a model of the printing apparatus instead of the printing apparatus information and extracts the layout rule indicating the selection range of parameters in self print settings from information concerning a specification of a self-print output,
the comparison unit compares the layout rule included in the print content with the layout rule in the extracted self print settings, and
the print style sheet update unit updates the print style sheet in the case where the layout rule in the extracted self print settings do not satisfy the layout rules included in the print content as a result of the comparison.

38. A printing apparatus comprising:
a printing apparatus specification information storage unit operable to store printing apparatus specification information concerning print output, including identification information specifying one of a self printing apparatus and a model of the printing apparatus;
a specification information sending unit operable to send the printing apparatus specification information to a connected receiving apparatus;
a content receiving unit operable to receive, from the receiving apparatus, a print content that includes print data and a print style sheet describing print settings of the print data, the print settings being associated with the print data a nd being processed by the receiving apparatus based on the printing apparatus specification information; and
a printing unit operable to print the print data included in the received print content based on the print style sheet.

39. A printing apparatus comprising:
a printing apparatus specification information storage unit operable to hold printing apparatus specification information concerning print output including identification information specifying one of a self printing apparatus and a model of the printing apparatus;
a specification information sending unit operable to send the printing apparatus specification information to a connected receiving apparatus;
a content receiving apparatus operable to receive, from the receiving apparatus, a print content that includes print data and print control information which is associated with the print data, the print control information including ( i ) printing apparatus information specifying one of at least one printing apparatus and a model of the printing apparatus and ( ii ) a print style sheet describing print settings of the print data by the printing apparatus;
an update notification receiving unit operable to receive a notification that the print style sheet needs to be updated from the receiving apparatus;
a layout rule extraction unit operable to extract a layout rule indicating a selection range of parameters of print settings from the printing apparatus specification information;
a print style sheet update unit operable to update the parameters of the print style sheet with reference to the extracted layout rule and the print style sheet; and
a printing unit operable to print the print data based on the updated print style sheet.

40. A content presentation system comprising a distribution server having a content generation apparatus and a receiving apparatus for receiving presentation content from the distribution server and having a connected presentation apparatus present the received presentation content,
wherein the content generation apparatus includes:
a presentation control information generation unit that generates presentation control information including ( i ) presentation specification information concerning a presentation specification that is previously defined so as to guarantee uniqueness concerning a page layout of presentation data and ( ii ) a presentation style sheet describing presentation settings of presentation data by one of a presentation apparatus and a model of the presentation apparatus; and
a content generation unit that associates the print data with the print control information and generates a presentation content including the presentation data and the presentation control information,
the receiving apparatus includes:
a content receiving unit that receives the presentation content;
a presentation control information extraction unit that extracts the presentation control information from the received presentation content; and
a content output unit that outputs the presentation content to the presentation apparatus based on the presentation specification and the presentation style sheet that are included in the presentation control information,
the presentation apparatus includes:
a content receiving apparatus that receives the presentation content from the receiving apparatus; and
a presentation unit that presents the presentation data based on the presentation style sheet included in the received presentation content.

41. A content printing system comprising a distribution server having a content generation apparatus and a receiving apparatus that receives a print content from the distribution server and has a connected printing apparatus print the received print content,
wherein the content generation apparatus includes:
a print control information generation unit that generates print control information including ( i ) print specification information concerning print specification that is previously defined in order to guarantee uniqueness concerning a page layout of print data and ( ii ) a print style sheet describing print settings of the print data by one of a printing apparatus and a model of the printing apparatus; and
a content generation unit that associates print data with the print control information and generates a print content including the print data and the print control information,
the receiving apparatus includes:
a content receiving unit that receives the print content;
a print control information extraction unit that extracts the print control information from the received print content;
a printing apparatus specification information receiving unit that receives printing apparatus specification information concerning a specification of print output of the printing apparatus from a printing apparatus connected to the receiving apparatus;
an update judgment unit compares a print specification specified by the print specification information with a specification of print output specified by the received printing apparatus specification information and judges whether the print style sheet should be updated or not;
a layout rule extraction unit that extracts a layout rule indicating a selection range of parameters of print settings in the printing apparatus from the received printing apparatus specification information in the case where the update judgment unit judges that the print style sheet should be updated as a result of the judgment;
a print style sheet update unit that updates the other parameters of the print style sheet so as to maintain the number of characters in a line and the number of lines in a page in the print style sheet with reference to the extracted layout rule and the print style sheet; and
a content output unit that outputs a print content including the print data and the updated print style sheet to the printing apparatus,
the printing apparatus includes:
a printing apparatus specification information storage unit that stores the printing apparatus specification information;
a specification information sending unit that sends the printing apparatus specification information to the receiving apparatus;
a content receiving unit that receives the print content from the receiving apparatus; and
a printing unit that prints the print data based on the print style sheet included in the received print content.

42. A content printing system comprising a distribution server having a content generation apparatus and a receiving apparatus that receives a print content from the distribution server and has a connected printing apparatus print the received print content,
wherein the content generation apparatus includes:
a print control information generation unit that generates print control information that includes print specification information concerning a print specification that is previously defined in order to guarantee uniqueness concerning a page layout of print data and a print style sheet describing print settings of the print data by the printing apparatus; and
a content generation unit that associates print data with the print control information and generates a print content including the print data and the print control information,
the receiving apparatus includes:
a content receiving unit that receives the print content;
a print control information extraction unit that extracts the print control information from the received print content;
a printing apparatus specification information receiving unit that receives printing apparatus specification information concerning a specification of print output of the printing apparatus from a printing apparatus connected to the receiving apparatus;
an update judgment unit that compares print specification information included in the print control information with the received printing apparatus specification information and judges whether the print style sheet should be updated or not; and
a notification sending unit that sends the print content and a notification that the print style sheet needs to be updated to the printing apparatus in the case where the update judgment unit judges that the print style sheet should be updated, and
the printing apparatus includes:
a printing apparatus specification information storage unit that stores the printing apparatus specification information;
a specification information sending unit that sends the specification apparatus specification information to the receiving apparatus;
a content receiving unit that receives, from the receiving apparatus, the print content and the notification that the print style sheet needs to be updated,
a layout rule extraction unit that extracts a layout rule indicating a selection range of parameters of print settings from the printing apparatus specification information;
a print style sheet update unit that updates the parameters of the print style sheet with reference to the extracted layout rule and the print style sheet; and
a printing unit that prints the print data based on the updated print style sheet.

43. A content printing system comprising a distribution server having a content generation apparatus and a receiving apparatus that receives a print content from the distribution server and has a connected printing apparatus print the received print content,
wherein the content generation apparatus includes:
a print control information generation unit that generates print control information that includes ( i ) print specification information concerning a print specification that is previously defined in order to guarantee uniqueness concerning a page layout of print data and ( ii ) a print style sheet describing print settings of the print data by the printing apparatus; and
a content generation unit that associates print data with the print control information and generates a print content including the print data and the print control information,
the receiving apparatus includes
a content receiving unit that receives the print content from the distribution server and output the received print content to a connected printing apparatus,
the printing apparatus includes:
a printing apparatus specification information storage unit that holds printing apparatus specification information concerning self print output;
a content input unit that inputs the print content from the receiving apparatus;
a print control information extraction unit that extracts the print control information from the inputted print content;
an update judgment unit that compares the print specification information included in the extracted print control information with the printing apparatus specification information and judges whether the print style sheet should be updated or not;
a layout rule extraction unit that extracts a layout rule indicating a selection range of parameters of print settings from the printing apparatus specification information in the case where the update judgment unit judges that the print style sheet should be updated as a result of the judgment;
a print style sheet update unit that updates parameters of a print style sheet with reference to the extracted layout rule and the print style sheet; and
a printing unit that prints print data based on the updated print style sheet.

44. A content presentation method for use in a system including a distribution server having a content generation apparatus and a receiving apparatus that receives a presentation content from the distribution server and has a presentation apparatus present the received presentation content, the method comprising: a step A executed in the content generation apparatus; a step B executed in the receiving apparatus; and a step C executed in the presentation apparatus,
wherein the step A includes:
a presentation control information generation step of generating presentation control information that includes ( i ) presentation specification information concerning a presentation specification that is previously defined in order to guarantee uniqueness concerning a page layout of presentation data and ( ii ) a presentation style sheet describing presentation settings of the presentation data by one of a presentation apparatus and a model of the presentation apparatus; and
a content generation step of associating the print data with the print control information and generating a presentation content including the presentation data and the presentation control information, and
the step B includes:
a content receiving step of receiving the presentation content;
a presentation control information extraction step of extracting the presentation control information from the received presentation content; and
a content output step of outputting the presentation content to the presentation apparatus based on a presentation specification included in the presentation control information and a presentation style sheet,
the step C includes:
a content receiving step of receiving the presentation content from the receiving apparatus; and
a presentation step of presenting the presentation data based on the presentation style sheet included in the received presentation content.

45. A content presentation method for presenting presentation data of the content used in a content presentation system including a distribution server having a content generation apparatus and a receiving side apparatus that receives a content from the distribution server and presents the received content in a form of displaying and printing, the method comprising: a step A executed in the content generation apparatus; and a step B executed in the receiving side apparatus,
wherein the step A includes:
a presentation control information generation step of generating presentation control information that includes presentation specification information concerning a presentation specification that is previously defined in order to guarantee uniqueness concerning a page layout of presentation data and a style sheet describing presentation settings in the case where the receiving side apparatus presents the presentation data; and
a content generation step of associating the presentation data with the presentation control information and generating a content including information indicating a resulting association and the presentation data, and
the step B includes:
a content receiving step of receiving the content from the server;
a presentation control information extraction step of extracting the presentation control information from the received content;
an update judgment step of comparing presentation specification information included in the extracted presentation control information with presentation apparatus specification information concerning a specification of a presentation output of the receiving side apparatus that is previously stored and judges whether the style sheet should be updated or not;
a layout rule extraction step of extracting a layout rule indicating a selection range of parameters of presentation settings from the presentation apparatus specification information in the case where it is judged that the print style sheet should be updated as a result of the judgment;
a style sheet update step of changing parameters in a style sheet with reference to the extracted layout rule and the style sheet; and
a presentation step of presenting presentation data based on the updated style sheet.

46. A program for a content generation apparatus used in a content presentation system including a distribution server having a content generation apparatus and a receiving apparatus that receives a presentation content from the distribution server and has a connected presentation apparatus present the received presentation content, the program being for causing a computer to function as:
a presentation control information generation unit that generates presentation control information that includes ( i ) presentation specification information concerning a presentation specification that is previously defined in order to guarantee uniqueness concerning a page layout of presentation data and ( ii ) a presentation style sheet describing presentation settings of presentation data by one of a presentation apparatus and a model of the presentation apparatus; and
a content generation unit that associates print data with the print control information and generates a presentation content including the presentation data and the presentation control information.

47. A program for a receiving apparatus used in a content presentation system including a distribution server having a content generation apparatus and a receiving apparatus that receives a presentation content from the distribution server and has a connected presentation apparatus present the received presentation content, the program being for causing a computer to function as:
a content receiving unit that receives the presentation content;
a presentation control information extraction unit that extracts presentation control information that includes presentation specification information concerning a presentation specification that is previously defined in order to guarantee uniqueness concerning a page layout of presentation data from the received presentation content and a presentation style sheet describing presentation settings of presentation data by one of a presentation apparatus and a model of the presentation apparatus; and
a content output unit that outputs the presentation content to the presentation apparatus based on the presentation specification and the presentation style sheet that are included in the presentation control information.

48. A program for a printing apparatus used in a content printing system including a distribution server having a content generation apparatus and a receiving apparatus that receives a presentation content from the distribution server and has a connected printing apparatus print the received print content, the program being for causing a computer to function as:
a printing apparatus specification information storage unit that holds printing apparatus specification information concerning a specification of a print output of the printing apparatus;
a specification information sending unit that sends the printing apparatus specification information to the receiving apparatus;
a content receiving unit that receives, from the receiving apparatus, a print content that includes print data and a print style sheet describing print settings of print data; and
a printing unit that prints the print data based on the print style sheet included in the received print content.
